# FASCICULE DE BREVET EUROPEEN

(11) **EP 3 873 860 B1**
(45) Date de publication et mention de la délivrance du brevet: **27.12.2023**
(21) Numéro de dépôt: 19794573.6
(22) Date de dépôt: 30.10.2019
(51) Int. Cl.: C03C 17/00, B60J 1/00, B60Q 3/208, B60Q 3/70, B60Q 1/26, F21S 43/235

(54) **VITRAGE LUMINEUX POUR VÉHICULE AUTOMOBILE**
KRAFTFAHRZEUGVERGLASUNG
LUMINOUS MOTOR-VEHICLE GLAZING UNIT

(30) Priorité: 31.10.2018 FR 1860101
(43) Date de publication de la demande: 08.09.2021
(73) Titulaire: Saint-Gobain Glass France, 92400 Courbevoie (FR)
(72) Inventeur: KLEO, Christophe, 60350 ATTICHY (FR); YAVARI, Keihann, 60280 MARGNY LES COMPIEGNE (FR)
(74) Mandataire: Saint-Gobain Recherche
(86) Numéro de dépôt international: PCT/EP2019/079647
(87) Numéro de publication internationale: WO 2020/089288

(56) Documents cités:
- WO-A1-2013/068679
- WO-A1-2016/156720
- US-A1- 2014 003 076
- US-A1- 2015 375 673

## Description

La présente invention concerne un vitrage lumineux pour véhicule automobile.

Dans le domaine automobile, il est connu de doubler certains feux de signalisation tels que les feux arrière, feux indicateur de direction, feux stop ou feux de marche arrière, par des sources lumineuses synchronisées avec ces feux de signalisation et de même couleur que ceux-ci. Ces sources lumineuses peuvent être placées à l'intérieur de l'habitacle, généralement à proximité de la lunette arrière, comme décrit par exemple dans la demande EP1234752. Dans le vitrage décrit dans ce document, des diodes électroluminescentes (DEL ou LED ou en anglais) sont en regard d'une face principale intérieure de la lunette visible à travers une fenêtre laissé dans l'émail d'encadrement. Elles sont placées dans un boîtier situé en bordure de la face intérieure.

Toutefois, ces feux de signalisation additionnels ne sont pas totalement satisfaisants en termes de confort visuel et d'un point de vue esthétique.

La présente demande propose un vitrage automobile à motifs lumineux visibles de l'extérieur (pour une signalétique externe, de la signalisation lumineuse externe ou pour un décor lumineux externe) davantage satisfaisant d'un point de vue esthétique ceci sans nuire aux exigences industrielles.

La présente demande a par conséquent pour objet un vitrage lumineux pour véhicule automobile (voiture, camion, bus, utilitaire etc) notamment fixe (de préférence) ou partiellement ouvrant (pivotable), comprenant :
- une première feuille transparente, de préférence teintée, notamment bombée, de préférence en plastique ou en verre notamment trempé, avec une première face principale F1 destinée à être dirigée vers l'extérieur du véhicule, une deuxième face principale F2 destinée à être dirigée vers l'intérieur du véhicule, et un chant (feuille polygonale, rectangulaire, triangulaire etc)
- en regard d'une des faces F1 ou F2, de préférence sur l'une des faces et mieux sur la face F2, une zone de masquage, en une matière opaque, zone de masquage (bande de préférence) de largeur W d'au moins 0,8cm et mieux 1cm et notamment d'au plus si 9cm surtout si formant une bande, et notamment même de longueur L d'au moins 10cm, zone de masquage couvrante sensiblement la première feuille (éventuellement à la ou aux zones marginales près) ou de préférence comportant une bande notamment linéaire, s'étendant (selon un axe X) le long d'une tranche du vitrage voire étant coudée (en L) ou même formant un cadre, de préférence bande en périphérie de la face F2 voire F1,
- une première épargne dans la zone de masquage (bande de préférence), de préférence fermée donc entourée par la zone de masquage (bande de préférence),
- une première source lumineuse, de préférence comportant un premier ensemble des diodes électroluminescentes (DEL ou LED) présentant chacune une face émettrice de lumière, diodes sur un premier support de source de préférence opaque ou réflecteur
la lumière émise par la première source lumineuse étant visible du côté de la face F2 en sortant par la première épargne.

Le vitrage lumineux selon l'invention comporte en outre du côté de la face F2, notamment (si vitrage monolithique) sur la face F2 et même fixé (collé etc) sur la face F2, un (premier) élément transparent, avec une face principale externe Fe orientée côté face F2 et une face principale interne Fi opposée (à Fi) et une tranche, la première source lumineuse étant couplée optiquement audit élément transparent dit guide de lumière, de préférence à une tranche dite de tranche de couplage du guide de lumière ou à la paroi dite paroi de couplage d'une cavité, traversante ou borgne dans l'épaisseur du guide de lumière.

La lumière émise par la première source lumineuse est guidée dans ledit élément transparent dit guide de lumière, la face principale externe Fe du guide de lumière (notamment sur la face F2, en particulier si vitrage monolithique) est en regard de la première épargne et également derrière la zone (bande) de masquage, éventuellement le guide de lumière ne dépassant pas de la tranche de la première feuille (de la tranche du vitrage) du côté de la zone de masquage.

Le vitrage lumineux selon l'invention comporte en outre :
- des premiers moyens d'extraction de lumière, aptes à extraire la lumière guidée dans ledit guide de lumière, de préférence sur la face principale externe Fe ou dans l'épaisseur du guide de lumière voire sur la face principale interne Fi, les premiers moyens d'extraction de lumière étant en regard de la première épargne, de sorte que un ou des motifs illuminés sont visibles du côté de la face F2
- côté face F2, de préférence sur l'élément transparent (et de taille similaire), un élément arrière de masquage, opaque, couvrant les premiers moyens d'extraction de lumière et les premiers moyens d'extraction de lumière étant entre la face F2 et l'élément arrière de masquage.

Lorsque la première source lumineuse émet dans l'ultraviolet (UV), le dispositif lumineux comporte une couche à base de luminophore fluorescent apte à convertir la lumière ultraviolette extraite en lumière visible, en particulier les premiers moyens d'extraction de lumière comportent un luminophore fluorescent et/ou la première épargne comporte une couche à base de luminophore fluorescent.

Lorsque la première feuille présente un clair de vitre (la zone de masquage étant non couvrante de préférence périphérique et/ou une bande), la première source lumineuse, un éventuel premier support de source, l'élément arrière de masquage sont absents du clair de vitre et même de préférence des moyens de commande de la première source lumineuse et un câblage d'alimentation électrique de la première source lumineuse ainsi que de préférence le guide de lumière sont absents du clair de vitre.

Enfin, les premiers moyens d'extraction sont sous forme d'un ou plusieurs premiers motifs espacés Mi (notamment signalétique, décor, signalisation), lorsque la première source lumineuse est en fonctionnement le ou les motifs Mi illuminés étant visibles du côté de la face F1, et/ou la première épargne est formée d'un ou plusieurs motifs espacés Me (notamment signalétique, décor, signalisation), de sorte que lorsque la première source lumineuse est en fonctionnement le ou les motifs Me illuminés sont visibles du côté de la face F1.

La première épargne forme le ou les motifs souhaités Me (notamment signalétique, décor, signalisation) ou encadre le ou les motifs lumineux Mi obtenus (directement) par les premiers moyens d'extraction de la lumière (la première épargne laisse visible ces motifs Mi). On peut avoir les motifs Mi et Me en coincidence.

On peut choisir à façon le ou les motifs souhaités et leurs fonctions du moment qu'ils sont visibles de l'extérieur illuminés.

L'élément arrière de masquage rend plus discrets, moins perceptibles le ou les motifs illuminables à l'état off.

La première épargne peut être une simple discontinuité de la zone de masquage ou être (tout ou partie) couverte d'une couche à base de luminophore et/ou encore une couche filtrante (par exemple source lumineuse blanche et filtre sélectif laissant passer le rouge, le vert, le jaune etc). On peut aussi alternativement ou cumulativement utiliser un filtre sélectif entre les premiers moyens d'extraction de lumière et la face F2 (sur la face F2 par exemple).

On peut ajuster la teinte et/ou l'absorption de la première feuille par exemple :
- la première feuille ayant une transmission lumineuse TL d'au moins 5% et mieux d'au moins 20% et même d'au moins 50% ou 70%,
- et/ou pour avoir une teinte bleue, grise ou verte.

La lumière perçue étant diffuse elle est moins éblouissante que des diodes en émission directe. La luminance peut être de 20 à 100Cd/m².

Par ailleurs, le clair de vitre éventuel est préservé ce qui participe à un vitrage plus esthétique.

Le dispositif lumineux formé par la première source lumineuse, le guide de lumière et couvert par l'élément arrière de masquage et un éventuel capot est facile à monter et fiable. On peut prévoir un détrompeur sur la première feuille pour faire face à la première épargne ou utiliser un gabarit de collage pour coller le dispositif lumineux sur la première feuille si le vitrage est simple ou une deuxième feuille transparente si le vitrage est feuilleté.

Le guide de lumière peut s'étendre le long du chant de la première feuille (par exemple également le long d'une bande de masquage périphérique) faisant face entièrement à la face F2 et dépasser éventuellement des faces de la première feuille par un côté de la première feuille. Par exemple, il s'étend le long d'un premier bord (inférieur ou supérieur) de la première feuille transparente et dépasse éventuellement d'un ou des bords latéraux (gauche et/ou droit).

Le guide de lumière peut aussi s'étendre en périphérie de la face F2 et dépasser des faces de la première feuille par un côté ou plusieurs côtés de la première feuille. Par exemple, il est en partie adjacent à un premier bord (inférieur etc) de la première feuille transparente et dépasse de ce premier bord.

La face Fe est de préférence sur la face F2 (ou F4 si vitrage feuilleté), posée ou mieux fixée (collé). La face Fe est en regard de la première épargne, à tout le moins les premiers moyens d'extraction (tout ou partie).

De préférence, pour satisfaire à des normes automobiles actuelles en vigueur (voiture, camion etc), la zone de masquage, opaque est de couleur C1 noire ou grise et l'élément arrière de masquage, opaque, notamment un fond couvrant, est de couleur C2 identique ou similaire à C1 notamment de couleur noire ou grise.

On réduit ainsi l'écart colorimétrique au maximum possible pour tendre vers l'invisibilité des motifs à l'état off.

C1 peut être d'une autre couleur et C'1 de ladite autre couleur identique ou similaire de préférence répondant aux normes susceptibles d'évoluer pour les vitrages de véhicule automobile (voiture, camion etc).

Concernant l'emplacement, la première source lumineuse et même un éventuel premier support de la première source lumineuse dit premier support de source (et même une éventuelle deuxième source lumineuse) est notamment :
- a) tout ou partie derrière la zone de masquage (bande de préférence), et en particulier le guide de lumière et la première source lumineuse (voire même une éventuelle deuxième source lumineuse) et même son éventuel premier support de source sont en totalité derrière la zone de masquage
- b) tout ou partie décalée des faces principales F1 et F2, et après le montage entre la garniture du véhicule (et donc masquée de l'intérieur) et la carrosserie (et donc masquée de l'extérieur).

Pour le cas a) ou b), la première source lumineuse peut être de préférence :
- solidaire d'une première tranche du guide de lumière qui est une tranche de couplage, fixée directement ou de préférence via un premier support de source ou un profilé de maintien (en L ou U etc) sur le guide de lumière, guide de lumière notamment dépassant du chant de la première feuille (du côté de la zone opaque de masquage)
- ou logée (avec son premier support de source éventuel) dans une première cavité traversante ou borgne du guide de lumière.

Lorsque le vitrage forme une vitre fixe (destinée à être) adjacente à une vitre coulissante, de préférence on évite de placer la première source lumineuse (avec son premier support de source éventuel) dans la région (destinée à être) entre la vitre fixe et la vitre coulissante, région qui comporte généralement un ou des profilés (en U le plus souvent) guidant la vitre coulissante.

Plus largement, on évite même de placer tout autre élément de l'invention (guide de lumière, cablage, moyen de commande etc) dans cette région.

De manière avantageuse concernant l'emplacement (dans un espace généralement réduit):
- la première source lumineuse (et même chaque source lumineuse couplée optiquement au guide de lumière) - de préférence des diodes électroluminescentes inorganiques - est masquée de l'extérieur c'est-à-dire invisible du côté de la face F1 :
   - masquée par la zone de masquage (notamment diodes avec des faces émettrices normales à F2, sur le premier support de source) en dépassant éventuellement du chant de la première feuille
   - et/ou tout ou partie décalée de la face F2 (déportée de la première feuille) notamment logeable entre une garniture de véhicule et une carrosserie du véhicule en position montée
- et de préférence un premier support de la première source lumineuse dit premier support de source est masqué de l'extérieur c'est-à-dire invisible du côté de la face F1 (et même chaque support de source lumineuse),
   - masqué par la zone de masquage (notamment espacé ou sur la face F2) notamment dépassant du chant de la première feuille
   - et/ou tout ou partie décalé de la face F2 (déporté de la première feuille), éventuellement avec la première source lumineuse, notamment logeable entre une garniture de véhicule et une carrosserie du véhicule en position montée,
   et même :
- des moyens de commande de la première source lumineuse (et même chaque source lumineuse couplée optiquement au guide de lumière) étant masqués de l'extérieur c'est-à-dire invisible du côté de la face F1 (de préférence sur le premier support de source) :
   - masqués par la zone de masquage (notamment espacés ou sur la face F2, éventuellement sur le premier support de source) notamment dépassant du chant de la première feuille
   - et/ou tout ou partie décalés de la face F2 (déporté de la première feuille) seul ou le premier support de source notamment logeable entre une garniture de véhicule et une carrosserie du véhicule en position montée F2.

En particulier, la première source lumineuse peut être montée sur un premier support dit premier support de source dépassant du chant de la première feuille transparente dans une zone dite zone périphérique dénuée d'encapsulation notamment polymérique (surmoulage) premier support de source notamment logeable entre une garniture de véhicule et une carrosserie du véhicule en position montée, et/ou le guide de lumière dépasse dans une zone dite zone périphérique dénuée d'encapsulation notamment polymérique (surmoulage) notamment logeable entre une garniture de véhicule et une carrosserie du véhicule en position montée.

De préférence, le vitrage lumineux comporte un capot de masquage (opaque), notamment plastique et/ou métallique, de la première source lumineuse et d'un éventuel premier support de la première source lumineuse dit premier support de source, de moyens de commande éventuel de la première source lumineuse, du guide de lumière, capot couvrant ou formant l'élément arrière de masquage, éventuellement fixant le guide sur la face F2, capot masqué de l'extérieur par la zone de masquage (bande etc) et éventuellement en partie dépassant du chant de la première feuille notamment logeable entre une garniture de véhicule et une carrosserie du véhicule en position montée.

Par ailleurs la première source lumineuse peut être configurée de manière à pouvoir recevoir des signaux de commande régissant leur allumage/extinction.

Le vitrage lumineux peut comporter des moyens de commande de la première source lumineuse notamment sur un premier support de la première source lumineuse (face avant avec des diodes notamment et/ou face arrière), notamment un microcontroleur, en particulier la première source lumineuse (et même chaque source lumineuse couplée optiquement au guide) étant allumée en fonction de consigne(s).

Par exemple, la consigne peut être liée à une information donnée par au moins un capteur aux moyens de commande. Le capteur peut être dans le véhicule, sur le vitrage ou à proximité du vitrage lumineux ou ailleurs.

Dans le cas de la lunette arrière il peut s'agir d'une information donnée par un radar (de recul etc).

Par exemple, la consigne peut être liée à une information d'activation délivrée par un signal de commande à distance (sans fil, notamment wifi) par exemple à partir d'une télécommande. Cette activation peut être déclenchée lors d'une ouverture de porte (si le vitrage est une vitre latérale) ou de coffre (si le vitrage est une lunette).

Lesdits moyens de commande sont de préférence absents du clair de vitre éventuel, déportés de la première feuille et/ou masqués par la zone de masquage (bande etc).

Bien entendu, quelle que soit la fonction du ou des motifs lumineux de la présente invention, la première source lumineuse comporte un système d'alimentation électrique, autonome ou rattaché au système électrique du véhicule. L'état allumé peut être uniquement prévu lorsque le véhicule est en fonctionnement (à l'arrêt ou roulant).

De préférence, la première source lumineuse est alimentée électriquement notamment via un cablage électrique.

Le cablage électrique, l'alimentation électrique sont de préférence absents du clair de vitre éventuel.

Le cablage peut être :
- tout ou partie masqué de l'extérieur par la zone de masquage (bande)
- et/ou tout ou partie décalé de la face F2 (déporté de la première feuille).

En cas d'encapsulation de la première feuille (de la vitre), la matière d'encapsulation peut recouvrir le câblage et le faire sortir à un endroit par exemple dans une zone (notamment de raccordement du cablage dans le véhicule) telle qu'un bord ou coin adjacent ou opposé au bord de la première feuille le plus proche de la première épargne.

Le cablage peut être un cable plat notamment d'épaisseur d'au plus 1cm ou 0,5mm et/ou de largeur d'au plus 3cm ou 1cm.

Avantageusement, les premiers moyens d'extraction de lumière s'inscrivent dans une surface SL (avec un contour ou périmètre PL), l'élément arrière de masquage, est un fond de masquage (de préférence plein ou avec des discontinuités donnant un taux de couverture d'au moins 90%, 95%), s'inscrit dans un surface SF avec un périmètre PF, SF couvre SL et est supérieure ou égal à SL.

De préférence, pour tendre vers l'invisibilité des motifs à l'état off, l'élément arrière de masquage, forme un fond de masquage et (est côté face interne Fi):
- couvre sensiblement la face interne Fi du guide de lumière (par exemple aux zones marginales près) lorsque le guide de lumière est circonscrit dans la zone de masquage
- ou, lorsque le guide de lumière dépasse du chant de la première feuille (par exemple du côté d'une bande opaque avec la première épargne), l'élément arrière de masquage (côté face interne) couvre au moins la région de la face interne Fi face à la face F2.

L'élément arrière de masquage, si en plaque et couvrant, peut en outre aider à protéger mécaniquement le guide de lumière lors du montage et postérieurement (éviter les rayures etc),

L'élément arrière de masquage peut être sur la face interne Fi, de préférence formant un fond de masquage- de préférence posé sur la face interne Fi ou collée sur tout ou partie du pourtour de la face Fi -, par exemple absente du côté du couplage optique si colle opaque, est choisi parmi :
- une plaque (film etc) opaque (en masse), par exemple d'au plus 3mm ou 1mm ou 0,5mm
- un revêtement opaque (encre, peinture etc) par exemple d'épaisseur submillimétrique et même d'au plus 50µm, notamment sur une feuille (plastique etc) d'au plus 0,5mm
- la plaque d'un capot opaque présentant en outre une ou des parois ou rebords opaques en regard de la tranche du guide de lumière et couvrant la tranche, de préférence venant en contact avec la face F2 ou espacés d'au plus 1mm ou collés à la face F2, le capot peut être l'élément qui va positionner l'ensemble sur le vitrage.

Le capot et/ou l'élément arrière de masquage et le guide de lumière peuvent être solidaires (et ensuite rapportés et mieux fixés sur la face F2): Le capot et/ou l'élément arrière de masquage peut être est fixé sur le guide de lumière pour tout moyen notamment : par montage en force, par des clips sur la périphérie, par un collage, éventuellement du bouterollage.

Une bande adhésive peut couvrir tout ou partie de la face libre de l'élément arrière de masquage ou du capot et dépasser sur la face F2 pour fixer l'élément arrière de masquage ou même l'ensemble l'élément arrière de masquage et guide de lumière sur la face F2.

Le guide de lumière et même l'élément arrière de masquage (et la première source lumineuse et le premier support de source) peut être placé dans le capot pour tout moyen notamment par montage en force.

La zone de masquage peut être une bande éventuellement formant un cadre de masquage:
- avec un bord externe orienté vers le chant de la première feuille notamment espacé d'au plus 3mm du chant,
- et avec un bord interne délimitant un clair de vitre de la première feuille,

La zone de masquage est notamment un élément opaque (film opaque etc) rapporté sur la première feuille (adhésivée etc) ou de préférence un dépôt (par exemple par impression ou sérigraphie) comme un encre ou un émail (noir ou gris de préférence) sur la face F2.

De préférence, la première épargne s'étend longitudinalement notamment dans une bande de la zone de masquage.

La première épargne peut déboucher sur le clair de vitre et/ou de l'autre côté ou être fermée donc entourée par la zone (bande) de masquage.

Dans le cas d'un vitrage feuilleté, une deuxième feuille transparente est plus intérieure à la première feuille et avec des troisième et quatrième faces principales F3 et face F4. Cette deuxième feuille transparente peut comporter une couche de masquage interne (noire ou grise de préférence comme la zone de masquage) sur la face F3 ou F4 avec une autre épargne plus grande ou en coïncidence avec la première épargne de préférence sur la face F2.

Dans une réalisation, les premiers moyens d'extractions de lumière sont sous forme d'un ou plusieurs premiers motifs espacés Mi qui s'inscrivent dans une surface SL avec un contour ou périmètre PL, la première épargne est une fenêtre qui présente un périmètre PE qui coïncide sensiblement avec PL.

Dans une réalisation préférée pour l'invisibilité des motifs à l'état off, la première épargne est formée d'un ou plusieurs motifs espacés Me et de préférence les premiers moyens d'extraction de lumière sont sous forme dudit ou desdits premiers motifs espacés Mi et de forme sensiblement identiques à Me et coïncidant avec le ou les motifs Me ou agrandis de manière homothétique notamment avec un écart (offset) de 0 à 25% du motif Me et/ou d'au plus 20mm ou même d'au plus 5mm.

Et mieux encore, l'élément arrière de masquage est un fond de masquage couvrant le guide de lumière (ou au moins la région du guide de lumière faisant face à la face F2 si guide de lumière dépassant).

Chaque motif Me de la première épargne et/ou Mi des premiers moyens d'extraction de lumière peut être au moins de 0,5mm ou 1cm.

Un motif Me de la première épargne peut être superposé à un motif d'extraction Mi ou encore il y a une zone pleine d'extraction dans laquelle s'inscrit le motif Me.

Par exemple une lettre du motif Me correspond à une même lettre du motif Mi ou à une zone d'extraction dans laquelle s'inscrit la lettre du motif Me.

Par exemple un mot de plusieurs lettres du motif Me correspond à un même mot de plusieurs lettres du motif Mi ou à une zone d'extraction dans laquelle s'inscrit tout le mot du motif Me.

La zone de masquage est de préférence une couche, un dépôt obtenu par voie liquide, sur la face F2, en particulier la matière opaque est un émail ou une encre (noire ou grise de préférence).

La couche peut être pleine et éventuellement avec un ensemble -voire un dégradé- de motifs ponctuels (disques etc) vers le clair de vitre éventuel.

L'homme du métier est familier avec l'application d'émaux opaques, généralement de couleur noire, au niveau des bords de vitrages automobiles.

Dans le cas d'une couche d'encre, cette encre n'ayant généralement pas besoin d'être soumise à des températures aussi élevées que l'émail, l'utilisation d'une encre permet des possibilités d'application supplémentaires. En effet, l'encre peut être appliquée par impression, par exemple par sérigraphie, flexographie ou jet d'encre sur l'une des faces principales de la première feuille. Mais en cas de vitrage feuilleté, elle peut également être appliquée sur l'une des faces de l'intercalaire de feuilletage qui se trouve, après assemblage, en contact direct avec l'une des faces principales internes de la première feuille et d'une deuxième feuille transparent.

Les encres noires pour l'impression de verre sont familières à l'homme du métier. L'impression de l'intercalaire de feuilletage avec des encres noires est décrite par exemple dans le document WO2012/140362.

Bien qu'il soit en principe envisageable, dans certains cas de vitres de véhicules, par exemple pour le déflecteur ou la custode (vitrages latéraux fixés sur la carrosserie, respectivement à l'avant et à l'arrière du véhicule), que toute la surface du vitrage soit couverte d'une couche opaque (encre ou émaillage complet ou encore film opaque rapporté), il est généralement indispensable, notamment pour la lunette arrière et certaines vitres latérales, que le vitrage comporte au moins une zone transparente, appelée « clair de vitre », non couverte par la couche opaque.

Ce clair de vitre représente généralement au moins 20%, de préférence au moins 50% et en particulier au moins 70% de la surface totale de la première feuille, -y compris les zones couvertes par l'encapsulation-. Autrement dit, la zone opaque couvre une zone qui représente généralement au plus 80%, de préférence au plus 50% et en particulier au plus 30% de la surface totale de la première feuille.

La densité optique de la couche opaque de masquage (émail, encre etc) est de préférence au moins égale à 2 et mieux de 2,5 à 5.

La densité optique de la couche opaque de masquage (émail, encre etc) formant l'élément arrière de masquage est de préférence au moins égale à 2 et mieux de 2,5 à 5. Ce peut être (en position montée sur le véhicule) :
- tranche (souvent longitudinale) supérieure,
- tranche (souvent longitudinale) inférieure
- tranche (souvent latérale) de gauche,
- tranche (souvent latérale) de droite,
- sur plusieurs tranches, sur un coin (en L etc).

La bande peut former un L ou même un cadre de masquage.

Lorsque l'on souhaite plusieurs signalétiques ou décors lumineux aptes à s'illuminer ensemble ou indépendamment on peut dupliquer tout en partie des moyens précités.

A tout le moins, la zone de masquage (notamment une bande) peut comporter deux ou plus épargnes (autant d'épargnes que nécessaire) notamment distantes ou rapprochées par exemple adjacentes et sur une même bande (inférieure, supérieure etc).

On peut dupliquer ensuite le guide de lumière (et l'élément arrière de masquage) ou utiliser deux (ou plus) zones d'extractions de lumière du premier guide de lumière - sans que les couleurs éventuellement différentes se mélangent -.

On peut avoir un élément arrière de masquage commun pour plusieurs guides de lumière voir un capot commun.

La zone de masquage peut comporter une bande de largeur W d'au plus 80mm avec la première épargne.

Le guide de lumière selon l'invention est notamment :
- en verre ou plastique de préférence incolore, clair ou extraclair,
- et/ou plan ou courbé, flexible (adapté, conforme à la courbure de la première feuille),
- de largeur W' inférieure ou égale à la largeur W de la zone de masquage (bande etc) et/ou d'au moins 1 ou 3 ou 5cm
- et de préférence d'épaisseur d'au plus 8 ou 5mm,
- flexible, plastique, derrière la bande de masquage et dépassant de la tranche du vitrage.

Le guide de lumière est réalisé par exemple à partir d'une matière plastique transparente. Cette matière plastique transparente est par exemple du polyméthacrylate de méthyle (PMMA) ou du polycarbonate (PC) ou un polyester en particulier un poly(éthylène téréphtalate) ou PET.

Le guide de lumière par exemple est de forme simple avec une surface donnée englobant la première épargne : rectangulaire, carrée, triangulaire ou même être un rond etc en somme la forme la plus adaptée au motif et à l'encombrement disponible.

L'épaisseur du guide de lumière est suffisante pour le couplage optique, l'injection de lumière de la première source lumineuse (par les faces émettrices des diodes).

On préfère par simplicité ne pas intercaler d'élément optique entre la premire source lumineuse (les diodes) et le guide de lumière.

Par exemple les diodes sont à émission latérale ce qui permet de minimiser l'épaisseur du guide de lumière.

Dans ce cas, le premier support de source est contre voire collé à la face F2 (ou F4 si vitrage feuilleté) car cela peut permettre de réduire l'encombrement de l'ensemble.

Le premier support de source peut aussi être sur une pièce posée ou fixée sur la face F2 (ou F4) en bordure de la tranche du guide ou dans une cavité du guide.

Dans le cas d'un vitrage simple, la face externe Fedu guide de lumière peut être espacée (d'au plus 10mm ou 5mm) ou mieux posée sur la face F2 ou collée à la face F2 par un adhésif - colle optique ou opaque (silicone etc), ruban adhésif double face- de préférence périphérique entre les faces F2 et Fe, sur un ou plusieurs côtés.

Dans le cas d'un vitrage feuilleté, la face externe Fe du guide de lumière peut être espacée (d'au plus 10mm ou 5mm) ou mieux posée ou collée sur une deuxième feuille transparente (avec des faces F3 et F4 la plus orientée vers l'habitacle) feuilletée par un intercalaire de feuilletage polymérique à la première feuille transparente, face externe Fe colléepar un adhésif notamment transparent- colle optique ou opaque (silicone etc), ruban adhésif double face- de préférence périphérique entre les faces F4 et Fe, sur un ou plusieurs côtés..

Dans le cas d'un vitrage simple comme feuilleté de préférence :
- l'adhésif (colle, ruban adhésif double face) est décalé des premiers moyens d'extraction de lumière
- et/ou forme une bande de largeur d'au plus 10mm (surtout si adhésif opaque) ou formant un cadre, bande continue ou discontinue (des points de colle etc).

Dans le cas d'un vitrage simple comme feuilleté, on préfère éviter un collage pleine face. On peut coller par un adhésif double face ou une colle thermoréticulable. Le cordon de colle nécessite un moyen de dépose et une finition, ce que l'on peut éviter avec un adhésif double face.

On peut même préférer que le collage soit absent le long de la tranche de couplage optique ou d'une paroi de couplage optique si la première source lumineuse est dans une cavité, traversante ou borgne du guide de lumière. Par exemple le collage se fait sur deux ou trois autres bords.

Comme matière adhésive pour fixer l'élément arrière de masquage au guide de lumière et/ou le guide de lumière à la face F2 ou d'une deuxième feuille transparente si vitrage feuilleté, on peut citer :
- une colle réticulable aux UV,
- un ruban adhésif double face, une bande (acrylique, PU..) adhésivée avec colle acrylique,
- une colle transparente (interne ou externe) : polyuréthane, silicone, acrylique.

On peut souhaiter avoir une première source lumineuse qui s'étend sur tout ou partie du chant du vitrage.

Plus précisément le premier support de source peut s'étendre s'étend sur tout ou partie du chant de la première feuille, par exemple ceinturant le chant.

Le premier support de source peut être d'épaisseur d'au plus 1cm ou 0,5 cm, 0,5mm. Le premier support de source peut être souple ou rigide.

On peut souhaiter avoir une première source lumineuse (diodes de préférence) qui s'étend sur plusieurs tranches:
- sur deux tranches adjacentes (d'un rectangle, carré etc) afin d'assurer l'homogénéité sur deux tranches opposées (d'un rectangle, carré etc) pour être homogène sur le rendu
- sur toute la tranche du guide de lumière, sur tous les côtés (d'un rectangle, carré etc) si on veut par exemple associer des couleurs différentes ou faire une animation du motif, ou pour plus de lumière en tenant compte d'un encombrement réduit.

La première source lumineuse est de préférence un premier ensemble de diodes électroluminescentes inorganiques sur une face avant d'un premier support de source (opaque ou réflecteur) et éventuellement le vitrage comporte une deuxième source lumineuse qui est un ensemble de diodes électroluminescentes inorganiques sur un deuxième support de source (opaque ou réflecteur) ou sur la face arrière dudit premier support.

Les diodes sont à émission frontale (top emitting en anglais) ou à émission latérale (side emitting en anglais).

De préférence pour les diodes à émission latérale les faces émettrices sont de hauteur d'au plus 1,5mm.

De préférence pour les diodes à émission frontale les faces émettrices sont de hauteur d'au plus 2mm et même le premier support de diodes est une barrette de largeur inférieure ou égale à l'épaisseur du guide de lumière.

Les diodes à émission latérale ont l'avantage de présenter un encombrement plus réduit que les diodes à émission frontale. Par contre, les diodes à émission frontale sont plus puissantes et moins coûteuses que les diodes à émission latérale.

Le premier support de source (diodes) est typiquement une carte de circuit imprimé dite PCB (printed circuit board en anglais) qui est une barrette (flexible ou rigide). Il peut être recouvert d'un vernis de tropicalisation, d'une peinture opaque ou réfléchissante etc. Notamment si le guide de lumière est en plastique, la distance entre la première source lumineuse (diodes de préférence) et les premiers moyens d'extraction peut être d'au plus 10cm pour limiter l'absorption.

La zone de masquage peut comporter une bande avec un bord interne délimitant un clair de vitre. La première feuille peut présenter un clair de vitre, délimité par le bord interne de la bande de masquage. Le guide de lumière comporte de préférence:
- une première tranche de sortie en face de la tranche de couplage optique ou d'une paroi de couplage optique et côté (le long du) bord interne de la bande de masquage
- et le vitrage lumineux comporte des moyens de piégeage, réflecteurs ou de préférence opaques (absorption), de la lumière guidée susceptible de sortir par la première tranche de sortie

Cela permet d'éviter un halo lumineux dans le clair de vitre.

La densité optique de la couche opaque (émail, encre etc) des moyens de piégeage et d'absorption (opaques), de la lumière guidée est de préférence au moins égale à 2 et mieux de 2,5 à 5.

Le vitrage lumineux avantageusement comporte des moyens de piégeage, réflecteurs ou de préférence d'absorption (opaques) de la lumière guidée susceptible de sortir par la tranche du guide notamment choisis parmi :
- une couche opaque (noire, blanche etc) sur la tranche du guide de lumière (une première tranche ou plus du guide) ou sur un élément contre ou espacé d'au plus 1 cm ou 5mm de la tranche du guide de lumière
- un ruban adhésif opaque (noir, blanc etc) sur la tranche du guide de lumière (une première tranche ou plus du guide)
- des parois (latérales) ou rebords opaques d'un capot dont la plaque principale couvrant l'élément arrière de masquage ou formant ledit élément arrière de masquage, parois sur ou espacées d'au plus 1cm de la tranche du guide de lumière (une première tranche ou plus du guide)
- un premier support de la première source lumineuse (notamment diodes à émission frontale), dit premier support de source, notamment ceinturant le guide de lumière, ou un deuxième support de source sur lequel est montée une deuxième source lumineuse (notamment diodes à émission frontale) -tranche opposée et/ou adjacente à celle (de couplage) du premier support de source-

Cela renforce aussi l'invisibilité des motifs à l'état off car réduit fortement voire supprime la diffusion de lumière parasite.

La densité optique de la couche opaque (émail, encre etc) des moyens de piégeage et d'absorption (opaques), de la lumière guidée est de préférence au moins égale à 2 et mieux de 2,5 à 5.

En outre, la première source lumineuse peut être couplée optiquement à une première tranche du guide dite tranche de couplage ou à une paroi d'une cavité du guide dite paroi de couplage optique, et le vitrage comporte de préférence en outre un élément opaque ou réflecteur en regard de la tranche de couplage optique ou de la paroi de couplage optique et espacée d'au plus 1cm, ou 5mm, qui est un premier support de la première source lumineuse, dit premier support de source (notamment diodes à émission frontale), ou une paroi ou rebord opaque d'un capot couvrant l'élément arrière de masquage ou formant ledit élément arrière de masquage.

Dans un mode de réalisation, le guide de lumière, notamment plastique, présente une cavité, borgne ou traversante dans l'épaisseur du guide de lumière, notamment linéaire et même coudée (en L) ou encore circulaire ou oblong, logeant la première source lumineuse (diodes de préférence), une première paroi des parois délimitant la cavité étant couplée optiquement à la première source lumineuse.

Lorsque la paroi est courbe, le premier support de source peut être flexible pour s'adapter à la courbure de la paroi. Le premier support de source peut être sur une pièce posée ou fixée sur la face F2 (ou F4) dans la cavité.

Dans ce dernier mode avec une cavité, le guide peut présenter une cavité (de préférence linéaire comme une rainure), borgne ou traversant dans l'épaisseur, de guidage du cablage électrique alimentant la première source lumineuse (diodes de préférence), notamment en continuité avec la cavité pour loger la première source lumineuse.

Dans ce dernier mode avec une cavité, la cavité peut loger une deuxième source lumineuse notamment dos à dos avec la première source lumineuse et une paroi, délimitant la cavité étant couplée optiquement à la deuxième source lumineuse et le guide de lumière présentant des deuxièmes moyens d'extractions de lumière séparés des premiers moyens d'extractions de lumière par la cavité (rectiligne comme une rainure ou même coudé en L, circulaire ou oblong etc).

Par exemple les première et deuxième sources lumineuses sont des diodes sur deux côtés (faces principales) opposés d'un premier support de source ou la première source lumineuse sont des diodes sur une face avant d'un premier support de source et la deuxième source lumineuse sont des diodes sur une face avant d'un deuxième support de source espacé (d'au plus 5 mm) ou contre la face arrière du premier support de source.

L'épaisseur totale de l'ensemble guide de lumière, élément arrière de masquage et d'un éventuel capot couvrant l'élément arrière de masquage peut être d'au plus 10mm notamment de 2 à 8mm et même 3 à 5mm. Notamment lorsque la première source lumineuse est un ensemble de diodes électroluminescentes inorganiques à émission latérale avec des faces émettrices d'au plus 1,5mm, l'épaisseur du guide de lumière est d'au plus 2mm et même d'au plus 1,5mm.

Le vitrage peut être un vitrage feuilleté comportant :
- ladite première feuille de verre (teintée etc)/un intercalaire de feuilletage polymérique notamment thermoplastique (PVB, EVA, etc)/ une deuxième feuille de verre (taille identique ou similaire) dont la face libre est destinée à être la face intérieure du véhicule (dite face F4 communément)
- ladite première feuille de plastique (teintée etc)/ intercalaire de feuilletage thermoplastique (PVB, EVA, etc)/ deuxième feuille de verre (taille identique ou similaire) dont la face libre est destinée à être la face intérieure du véhicule (dite face F4 communément)
- ladite première feuille de verre (teintée etc) / intercalaire de feuilletage thermoplastique/ deuxième feuille de plastique (polyester, PET, PC, PMMA etc) (taille identique ou similaire) dont la face libre est destinée à être la face intérieure du véhicule (dite face F4 communément)

Dans le cas d'un vitrage feuilleté, le guide de lumière est de préférence sur et même fixé (collé etc) sur la face F4.

Si le vitrage feuilleté comporte une autre zone de masquage (interne) en face F3 ou F4 en regard de la zone de masquage (en face F2 de préférence) on réalise une autre épargne en congruence avec la première épargne et/ou avec le ou les motifs Mi.

Toutefois, de préférence, le vitrage est simple, -la première feuille transparente en verre ou plastique n'est pas feuilletée à une deuxième feuille transparente de taille similaire-, la face F2 est la face destinée à être la face intérieure du véhicule.

On utilisera de préférence pour la première feuille un verre minéral sodo-calcique de préférence trempée:
- teintée tel que le verre vert TSA 3+, 4+ ou 5+ commercialisé par la Demanderesse ou encore le verre gris Venus GREY 40, 30, ou encore 20 et 10 commercialisé par la Demanderesse
- incolore tels que le verre Planilux^{®} ou Planiclear commercialisé par la Demanderesse. Dans le cas d'un vitrage simple, la première feuille en verre de préférence trempé ou en plastique (PMMA ou en PC) a typiquement une épaisseur comprise de 2 et 6mm en particulier 3,15mm, 3,85mm 4.85mm.

La première feuille peut de toute forme : ronde , polygonale (rectangulaire ) etc.

Ce peut être :
- une vitre latérale, notamment simple, en particulier
   - une vitre latérale fixe : fixe de porte avant (front door quaterlite en anglais), fixe de porte arrière (rear door quaterlite en anglais), custode -(sixlite en anglais), un déflecteur (windscreen quaterlite en anglais)
   - une vitre latérale ouvrante pivotante
   ou encore :
- une lunette (backlite en anglais), notamment en verre bombé et trempé et le vitrage est simple
- un toit ou pavillon comportant un bord s'étendant en bordure supérieure du pare brise, notamment la première feuille est en verre trempé ou en plastique (PC etc) et le vitrage est simple ou le vitrage est feuilleté,
- une lamelle avant
- un pare-brise (notamment feuilleté).

Pour extraire la lumière, il existe de nombreux moyens d'extraction familiers à l'homme du métier et communément utilisés dans le domaine des vitrages. Les premiers moyens d'extraction de la lumière peuvent être, par exemple :
- une zone texturée (dépolie, par acidage, abrasion etc)
- un revêtement diffusant
- une zone gravée dans l'épaisseur
- ou encore d'éléments diffusants, tels que des particules incorporées en masse (pour un guide de lumière en plastique de préférence).

On peut utiliser en tant que revêtement diffusant n'importe quel revêtement diffusant couramment utilisé dans le domaine du vitrage. Un tel revêtement comprend généralement des particules ayant une taille de l'ordre du micromètre et un liant, organique ou minéral, permettant de faire adhérer ces particules à la surface du verre. Les particules peuvent être en métal ou en oxyde métallique. Leur taille moyenne est typiquement comprise entre 50nm et 1 micromètre. Un revêtement diffusant est décrit par exemple dans la demande internationale WO 01/90787.

Les moyens d'extractions peuvent être blancs ou colorés.

Les premiers moyens d'extraction de lumière sont de préférence sur la face externe Fe ou dans l'épaisseur du guide de lumière.

En alternative, les premiers moyens d'extractions sur la face Fi par exemple un émail diffusant puis un émail opaque (noir etc) en congruence dessus formant l'élément arrière de masquage.

Dans un mode de réalisation préféré, la première feuille est une vitre latérale fixe avec un clair de vitre de préférence et une première épargne périphérique sur la face F2, en particulier une custode, fixe de porte avant, fixe de porte arrière, un déflecteur.

En particulier la première épargne est sur une bande inférieure de masquage et les motifs forment un LOGO, un élément décoratif lisible à l'horizontale.

En particulier la première épargne est sur une bande inférieure de masquage et les motifs forment un LOGO, un élément décoratif lisible à la verticale.

La couleur de la lumière visible de l'extérieur, peut être déterminée, entre autres :
- par le spectre d'émission de la première ou (ou chaque) source lumineuse,
- par le spectre d'absorption du guide
- par le spectre d'absorption/d'émission du matériau formant le moyen d'extraction de la lumière
- par tout élément teinté rapporté par exemple : un intercalaire de feuilletage teinté en contact adhésif avec la première face F2 de la première feuille, ou par un filtre
- par le spectre d'absorption de la première feuille.

On peut citer à titre d'exemples de modes de réalisation préférés les suivants :
- LED de couleur jaune auto et un matériau d'extraction blanc en combinaison éventuelle avec une première feuille non teintée;
- LED de couleur jaune auto et un matériau d'extraction orange ou jaune en combinaison éventuelle avec une première feuille non teintée;
- LED de couleur blanche et un matériau d'extraction orange ou jaune en combinaison éventuelle avec une première feuille non teintée.

Dans une première configuration de réalisation, la première feuille de verre comporte une encapsulation polymérique (opaque) périphérique qui est un surmoulage sur tout ou partie du pourtour du chant.

L'encapsulation peut être en polyuréthane, notamment en PU-RIM (reaction in mold en anglais), la réticulation du PU bicomposant opérant dans le moule, une fois les deux composants injectés simultanément. Cette matière est typiquement injectée jusqu'à 130°C et quelques dizaines de bars. D'autres matières d'encapsulation sont :
- de préférence les thermoplastiques souples : thermoplastique élastomère (TPE), polyvinyle chlore (PVC), terpolymère éthylène-propylène-diène (EPDM), typiquement injectés entre 160°C et 240°C et jusqu'à 100 bars,
- les thermoplastiques rigides : polycarbonate (PC), polyméthacrylate de méthyle (PMMA), polyéthylène (PE), polypropylène (PP), polyamide (PA66), acrylonitrile butadiène styrène (ABS), ABSPC, typiquement injectés entre 280°C et 340°C et entre 500 et 600 bars.

Dans un cas le guide de lumière et le premier support de source font entièrement face à la face F2, l'encapsulation peut être sur tout le pourtour de la première feuille de verre.

L'encapsulation peut être monoface (sur face F2 ou F4), biface (sur face F2 ou F4 et sur le chant) ou tri face (sur face F2 ou F4 sur le chant et sur face F1).

Dans le cas le guide de lumière et/ou le premier support de source sont décalés de la face F2 en dépassant sur une première tranche de la première feuille, l'encapsulation peut être de préférence absente de la zone de la première tranche comme déjà décrit.

Une pièce (plastique et/ou métallique comme l'aluminium, l'acier) comme un insert, un pièce rigide, un enjoliveur, des pions peut être ancrée sur l'encapsulation et/ou monté dessus.

Dans une deuxième configuration de réalisation, la première feuille de verre comporte un élément tel qu'un extrudat polymérique (opaque) périphérique sur tout ou partie du pourtour du vitrage.

La fonction que la signalisation dépendra alors de sa position dans le véhicule et de la couleur de la lumière émise par le moyen d'extraction de la lumière.

Le ou les motifs Me et/ou Mi peut former :
- un élément de décoration,
- une signalétique
   - informative : (pictogramme, monogramme, symbole etc): ouverture de porte, hayon, trappe à carburant, coupure d'alarme, indicateur de charge de batterie, distance de sécurité, indicateur d'une panne, indicateur sur le trafic, indicateur routier, taxi occupé ou vide
   - et/ou publicitaire (LOGO du constructeur, nom du véhicule, type de véhicule : de secours etc)
   - une signalisation routière (répétiteur de clignotant, de feux latéraux, feu stop).

Dans la présente demande, la dénomination signalétique est fondée sur une sémantique iconique et/ou langagière, c'est-à-dire utilisant des signes (chiffres, pictogrammes, logos, couleurs symboliques...) et/ou une lettre ou des mots.

Lorsqu'il est destiné à fonctionner comme un feu indicateur de direction, le vitrage lumineux selon l'invention émet une lumière de couleur jaune auto (voir Directive du Conseil n° 76/759/CEE du 27 juin 1976, Annexe V). Il est alors situé au niveau de la lunette arrière lorsqu'il s'agit d'un clignotant arrière (catégorie 2), au niveau d'une vitre latérale lorsqu'il s'agit d'un répétiteur de clignotant (catégorie 5), ou au niveau du pare-brise lorsqu'il s'agit d'un feu clignotant avant (catégorie 1).

De façon analogue le vitrage lumineux émettra une lumière rouge lorsqu'il fonctionne comme feu arrière ou feux-stop, et une lumière blanche lorsqu'il s'agit par exemple d'un feu de marche arrière. Dans ces deux cas, le vitrage lumineux correspond bien entendu à la lunette arrière.

Dans un mode de réalisation du véhicule de la présente invention, le vitrage lumineux est un feu indicateur de direction, capable d'émettre une lumière jaune auto clignotante. Il s'agit de préférence d'un répétiteur de clignotant (feu indicateur de direction de catégorie 5 ; Directive du Conseil n° 76/759/CEE du 27 juin 1976), situé au niveau des déflecteurs ou des vitres latérales fixes avant.

L'invention convient à un pare-brise défini par ses bords latéraux et longitudinaux et avec un encadrement périphérique opaque, comme un émail, en face F2 et en face F3 ou en F2 et F4.

La présente invention a également pour objet un véhicule, de préférence un véhicule automobile, comportant au moins un vitrage lumineux tel que décrit ci-avant.

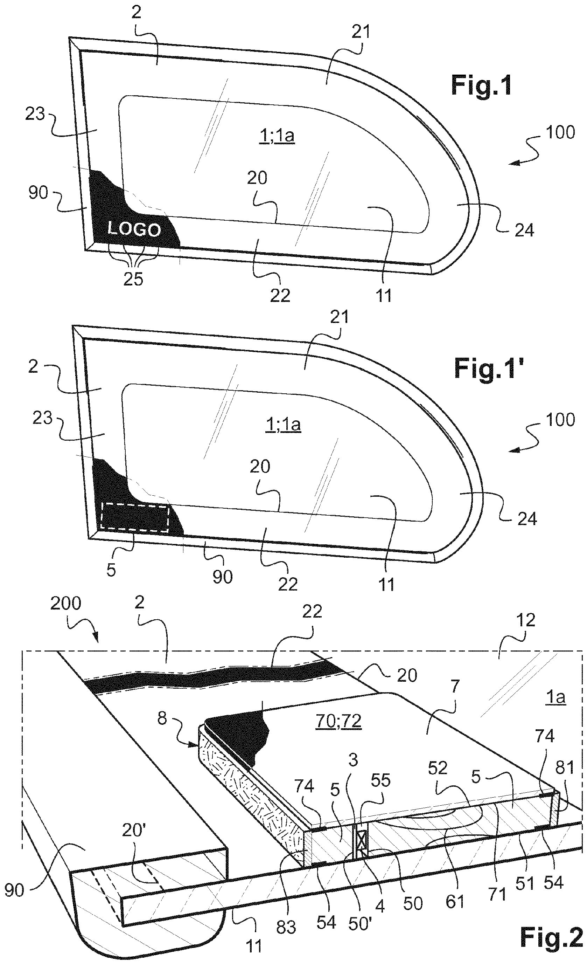

La présente invention sera décrite maintenant en référence aux figures annexées dans lesquelles
La figure 1 représente une vue schématique de face d'un vitrage lumineux côté face extérieure F1 et à l'état allumé dans un premier mode de réalisation de l'invention.
La figure 1' représente une vue schématique de face du vitrage lumineux côté face extérieure F1 à l'état éteint du premier mode de réalisation.
La figure 2 représente une vue schématique partielle de coupe et en perspective d'un vitrage lumineux montrant la face interne F2 et un dispositif lumineux sur la face F2 dans un deuxième mode de réalisation selon l'invention.
La figure 3 représente une autre vue schématique partielle en perspective du vitrage lumineux du deuxième mode de réalisation.
La figure 4 représente une autre vue schématique partielle en perspective et en éclaté du vitrage lumineux du deuxième mode de réalisation.
La figure 5 représente une vue schématique partielle en perspective et en éclaté d'un vitrage lumineux dans un troisième mode de réalisation selon l'invention.
La figure 6 représente une vue schématique partielle en perspective et en éclaté d'un vitrage lumineux dans un quatrième mode de réalisation selon l'invention.
La figure 7 représente une vue schématique partielle en perspective et en éclaté d'un vitrage lumineux dans un cinquième mode de réalisation selon l'invention.
La figure 8 représente une vue schématique partielle en perspective d'un vitrage lumineux dans un sixième mode de réalisation selon l'invention.

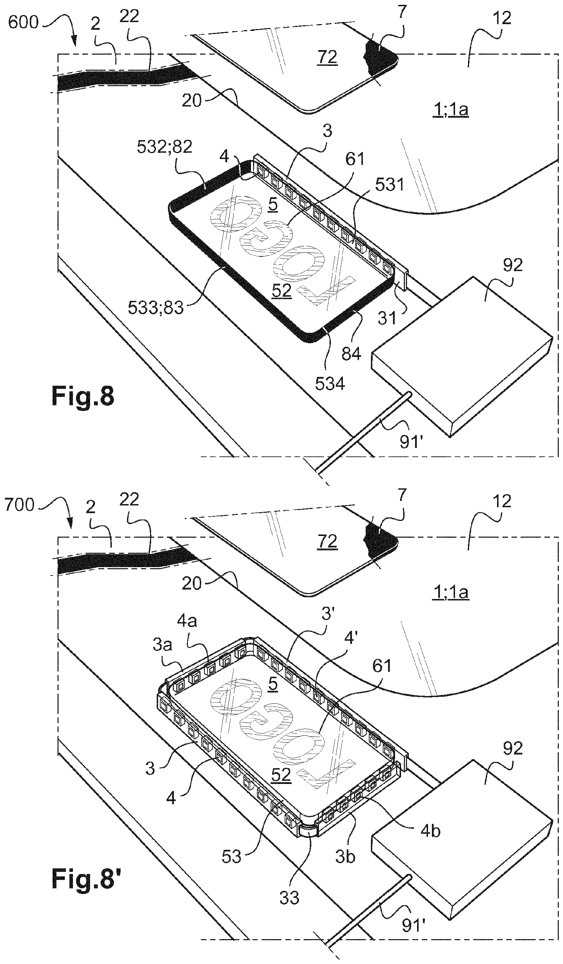

La figure 8' représente une vue schématique partielle en perspective d'un vitrage lumineux dans un septième mode de réalisation selon l'invention.

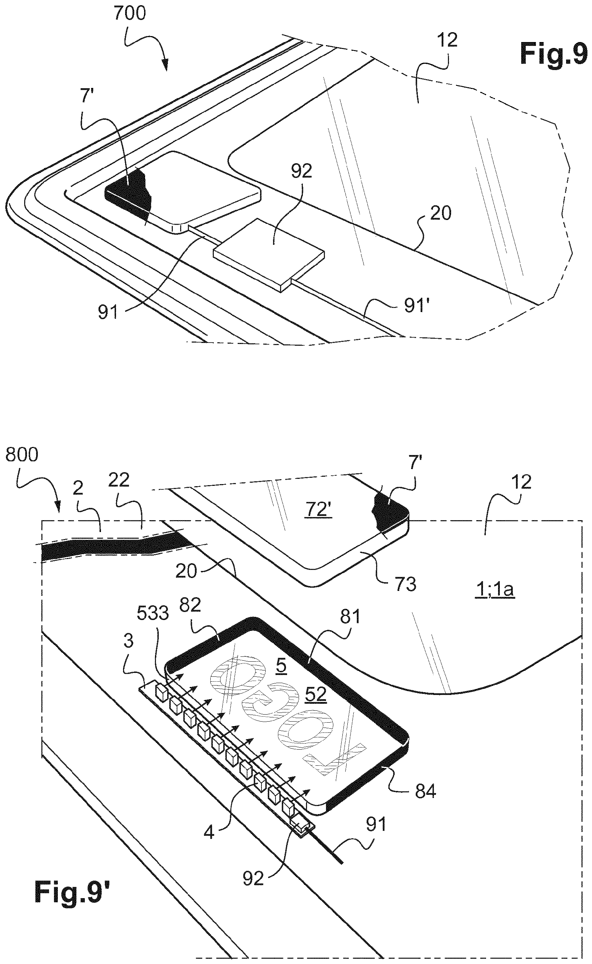

La figure 9 représente une vue schématique partielle en perspective du vitrage lumineux du septième mode de réalisation.
La figure 9' représente une vue schématique partielle en perspective du vitrage lumineux dans un huitième mode de réalisation selon l'invention.

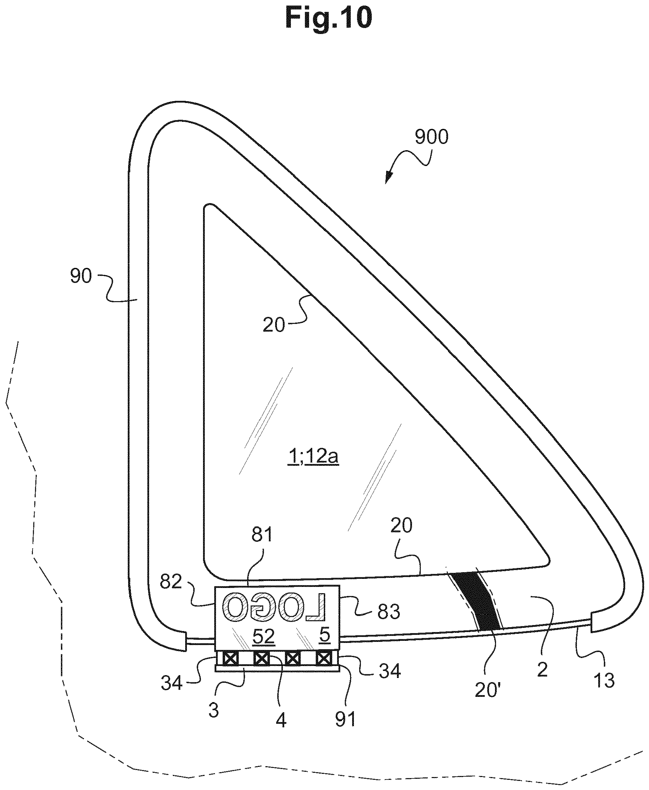

La figure 10 représente une vue schématique partielle de face du vitrage lumineux dans un neuvième mode de réalisation selon l'invention.

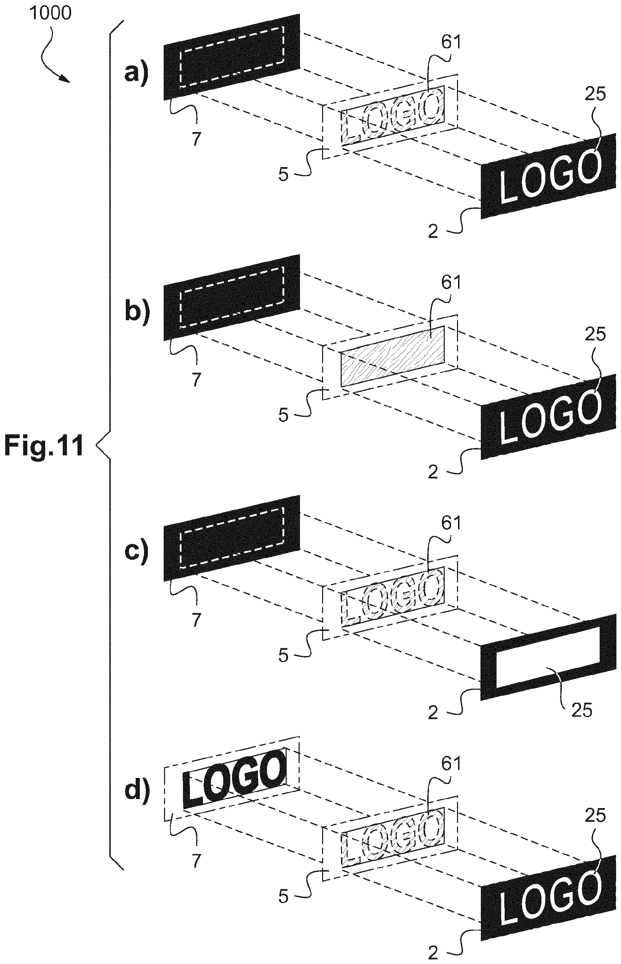

La figure 11 représente une vue schématique montrant respectivement de gauche à droite quatre configurations de superposition de l'élément arrière de masquage, du guide de lumière avec les premiers moyens d'extractions de lumière et de la zone de masquage avec la première épargne, dans un dixième mode de réalisation selon l'invention.

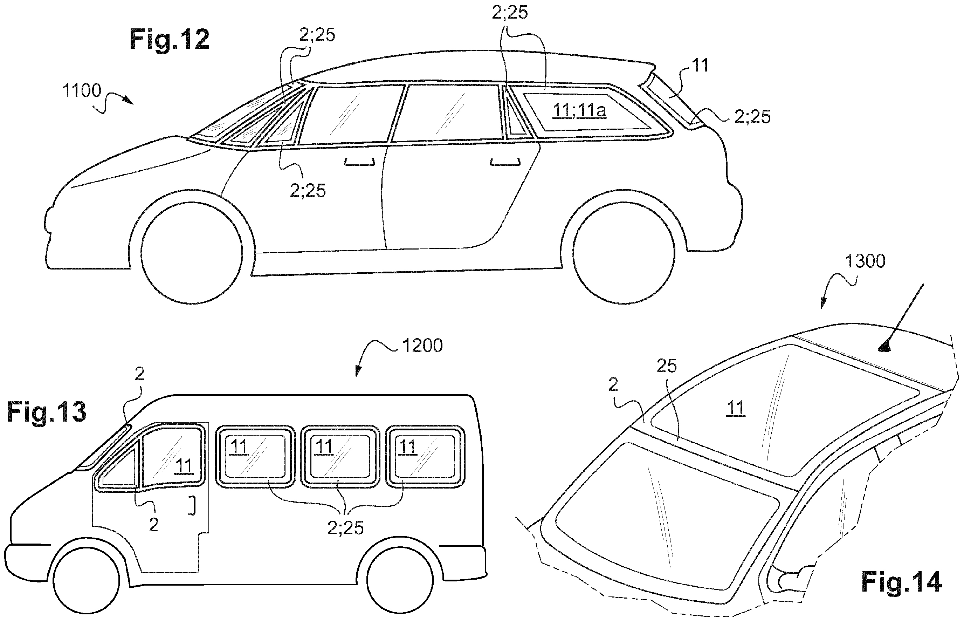

La figure 12 représente une vue schématique de côté d'un véhicule intégrant des vitrages lumineux dans un onzième mode de réalisation selon l'invention.
La figure 13 représente une vue schématique de côté d'un véhicule intégrant des vitrages lumineux dans un douzième mode de réalisation selon l'invention.
La figure 14 représente une vue schématique et partielle en perspective de l'avant d'un véhicule intégrant un vitrage lumineux dans un treizième mode de réalisation selon l'invention.

La figure 1 représente une vue schématique de face d'un vitrage lumineux 100 à l'état allumé dans un premier mode de réalisation de l'invention. La figure 1' représente une vue schématique de face du vitrage lumineux côté face extérieure F1 à l'état éteint du premier mode de réalisation.

Il s'agit d'un vitrage lumineux simple de véhicule automobile 100 (voiture, camion, bus) ici fixe (de préférence), comme une custode ou un déflecteur comprenant :
- une première feuille transparente 1 de préférence en verre notamment trempé et/ou teinté ou en plastique notamment teinté, d'épaisseur 3,15mm tel que le vitrage vert TSA3+ vendu par la Demanderesse avec une face principale 11 dite F1 destinée à être dirigée vers l'extérieur du véhicule, une face principale F2 destinée à être dirigée vers l'intérieur du véhicule, et un chant,
- sur la face F2, un cadre de masquage 2 en encre ou émail noir ou gris (visible par transparence sur la figure 1) avec des bandes inférieures et supérieures 21, 22 gauche et droite 23, 24 laissant un clair de vitre 1a délimité par un bord interne 20 de la bande par exemple de largeur W de 3cm
- une première épargne 25 dans le coin de la bande longitudinale inférieure de masquage 21, épargne fermée donc entourée par la bande 22, ici représentant les lettres LOGO par exemple lettres de 2cm de hauteur sur 1cm de largeur
- derrière la bande de masquage inférieure 22 :
   - un dispositif lumineux comportant :
      - une première source lumineuse, qui est un premier ensemble des diodes électroluminescentes (DEL ou LED) présentant chacune une face émettrice de lumière, diodes sur une face avant d'un premier support de source opaque,
      - sur la face F2 un guide de lumière 5 (rectangulaire cf traits pointillés sur la figure 1') qui est transparent avec sur une face principale du guide de lumière un motif diffusant sous la forme des mêmes lettres LOGO de même taille ou plus grandes que le LOGO de l'épargne 25 et en face de la première épargne.
   - un fond de masquage du LOGO diffusant derrière le guide de lumière, noir ou gris comme l'émail 2,
- une encapsulation polymérique en cadre 90.

Lorsque les diodes sont éteintes, la première épargne semble quasi invisible grâce au fond de masquage.

Le dispositif lumineux est masqué de l'intérieur par la garniture du véhicule.

La figure 2 représente une vue schématique partielle et de coupe en perspective d'un vitrage lumineux 200 montrant la face interne F2 et un dispositif lumineux sur la face F2 dans un deuxième mode de réalisation selon l'invention.

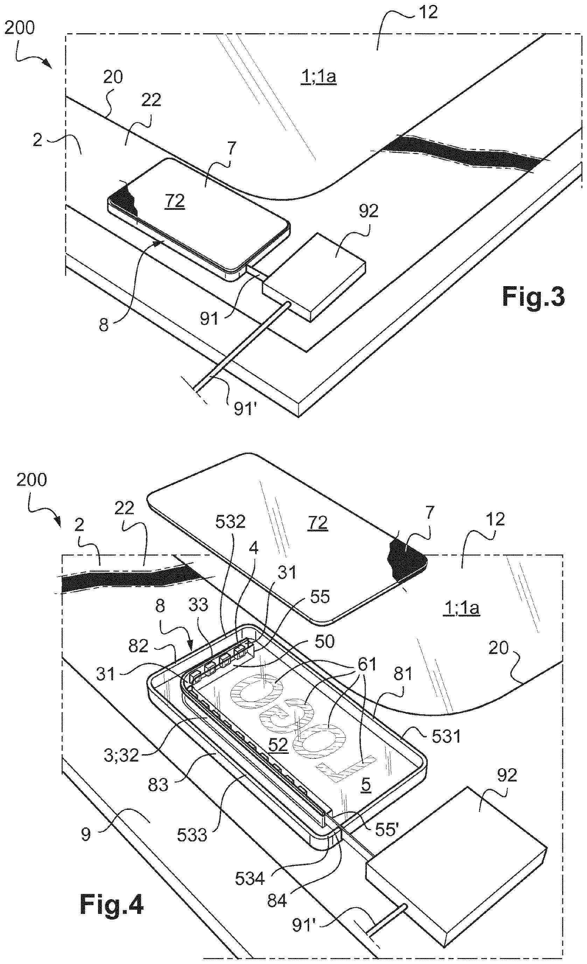

La figure 3 représente une autre vue schématique partielle en perspective du vitrage lumineux 200 du deuxième mode de réalisation.

La figure 4 représente une autre vue schématique partielle en perspective et en éclaté du vitrage lumineux 200 du deuxième mode de réalisation.

Il s'agit d'un vitrage lumineux simple 200 pour véhicule automobile (voiture, camion, bus) ici fixe (de préférence), comprenant :
- une première feuille transparente 1, de préférence en verre trempé teinté ou incolore ou en plastique, avec une face principale dite F1 destinée à être dirigée vers l'extérieur du véhicule, une face principale F2 12 destinée à être dirigée vers l'intérieur du véhicule, et un chant
- sur la face F2, un cadre de masquage 2 en encre ou émail noir (visible par transparence sur la figure 2) avec des bandes supérieure 21 et inférieure 22 gauche 23 et droite 24 laissant un clair de vitre 1a, délimité par un bord interne 20 de la bande, par exemple de largeur W de 1cm à 8cm par exemple 5cm
- une première épargne dans la bande longitudinale inférieure de masquage 22, épargne par exemple fermée donc entourée par la bande 22, ici représentant les lettres LOGO par exemple lettres de 3cm de hauteur sur 2cm de largeur
   - un dispositif lumineux comportant :
      - une première source lumineuse, qui est un premier ensemble des diodes électroluminescentes 4 à émission frontale présentant chacune une face émettrice de lumière, diodes sur une face avant 31 d'un premier support de source opaque 3,
      - sur la face F2, un guide de lumière 5 (ici rectangulaire par exemple, avec sa longueur le long du bord interne de masquage 20) qui est transparent avec sur une face principale externe Fe 51 du guide de lumière un motif diffusant 61 sous la forme des mêmes lettres LOGO de même taille ou plus grandes que le LOGO de l'épargne et en face de la première épargne, guide 5 collé sur la face F2 12 par sa face externe Fe 51 par un ruban adhésif double face périphérique 54 par exemple formant un cadre,
   - un fond de masquage 7 du LOGO diffusant derrière le guide de lumière, noir ou gris comme l'émail 2, qui est une plaque 70 noire en masse (ou par un revêtement sur un film plastique par exemple), plaque 7 collée sur la face externe 51 du guide 5 par sa face externe 71 au moyen d'un ruban adhésif périphérique 74 par exemple formant un cadre, fond couvrant les premiers moyens d'extraction 61,
- une encapsulation polymérique en cadre 90.

Le vitrage lumineux comporte des moyens opaques de piégeage de la lumière guidée susceptible de sortir par la tranche du guide de lumière ici un ruban adhésif opaque 8 (blanc etc) sur toute la tranche du guide de lumière (rubans aboutés ou en un morceau) :
- ruban 83 sur une première tranche 531 côté bord interne 20 de la bande de masquage 22,
- ruban 81 sur une première tranche longitudinale 531 côté bord interne 20 de la bande de masquage 22 (évitant aussi un halo parasite dans le clair de vitre),
- ruban 82 sur une deuxième tranche adjacente latérale 532,
- éventuellement ruban 83 sur une troisième tranche longitudinale opposée à la première tranche et ruban 84 sur une quatrième tranche adjacente latérale 534.

Les rubans 83 et 84 sont optionnels car le premier support de source 3 en L notamment opaque (opacifié etc) peut faire déjà barrière à la lumière sortante par le chant.

Le guide de lumière 5 présente une cavité 55 (cf. figure 4) ici traversante dans l'épaisseur, ici une rainure coudée en L, logeant les diodes 4 et son support de source 3 flexible également en L, une première paroi 50 des parois délimitant la cavité 55 étant couplée optiquement à la première source lumineuse 4.

L'ensemble support de source 3 et diodes 4 peut être monté en force dans la rainure 50 ou la face arrière 32 du support de source 3 collée à la paroi 50' opposée à la paroi de couplage ou encore la face avant 31 collée à la paroi de couplage 50.

Des diodes en L permettent d'avoir plus de lumière. Alternativement la cavité 55 est linéaire (sans coude), le support de diodes 3 est une barrette rectiligne.

On peut prévoir en outre un capot de masquage couvrant l'élément arrière de masquage 7, les moyens de piégeage 8 (par ses rebords), éventuellement fixant le guide de lumière 5 et/ou l'élément arrière de masquage 7 sur la face F2, capot masqué de l'extérieur par la bande de masquage 22.

L'épaisseur totale de l'ensemble guide de lumière 5, l'élément arrière de masquage 7 et éventuel capot couvrant l'élément arrière de masquage est de préférence d'au plus 10mm notamment de 2 à 10mm et même 3 à 5mm, l'épaisseur du guide de lumière est d'au plus 3mm et même d'au plus 1,5mm.

Le vitrage lumineux 200 comporte en outre des moyens de commande 92 de la première source lumineuse 4, en particulier la première source lumineuse étant allumée en fonction de consigne(s). Ici ces moyens de commande sont collés sur la face F2 à proximité du guide 5. Ils peuvent aussi être sur le premier support de source (face avant et/ou arrière). Un câblage électrique 91, 91' alimente la première source lumineuse 4 et les moyens de commande 92. La cavité 55 est prolongée par une rainure 55' de guidage du câblage 91 sortant vers les moyens de commande 92. Le cablage 91 ou 91' peut sortir parallèle à la face F2 ou avec un angle avec la face F2 par exemple normal à la face F2.

La première feuille 1 présente un clair de vitre 1a. La première source lumineuse 4, le premier support de source 3, le guide de lumière 5, l'élément arrière de masquage 7, les moyens de commande de la première source lumineuse 92, le câblage d'alimentation électrique 91 de la première source lumineuse, les moyens de piégeage 8 sont absents du clair de vitre.

L'encapsulation polymérique 90 de la première feuille qui est un surmoulage, en une matière d'encapsulation peut couvrir le câblage et le faire sortir dans une zone (de raccordement du câblage dans le véhicule) telle qu'un bord ou coin adjacent ou opposé au bord de la première feuille le plus proche de la première épargne.

Les diodes émettent dans le blanc, le jaune ou tout autre couleur. La première épargne est un ensemble de discontinuités de la couche 2. En alternative, la première épargne 25 comporte un filtre coloré et par exemple les diodes émettent en lumière blanche.

En alternative, les diodes 4 émettent dans l'UV et le motif diffusant 61 est une couche diffusante comportant des luminophores fluorescents ou sous une couche à base de luminophores fluorescents.

En alternative, les diodes 4 sont à émission latérale (la cavité 55 peut être élargie si nécessaire).

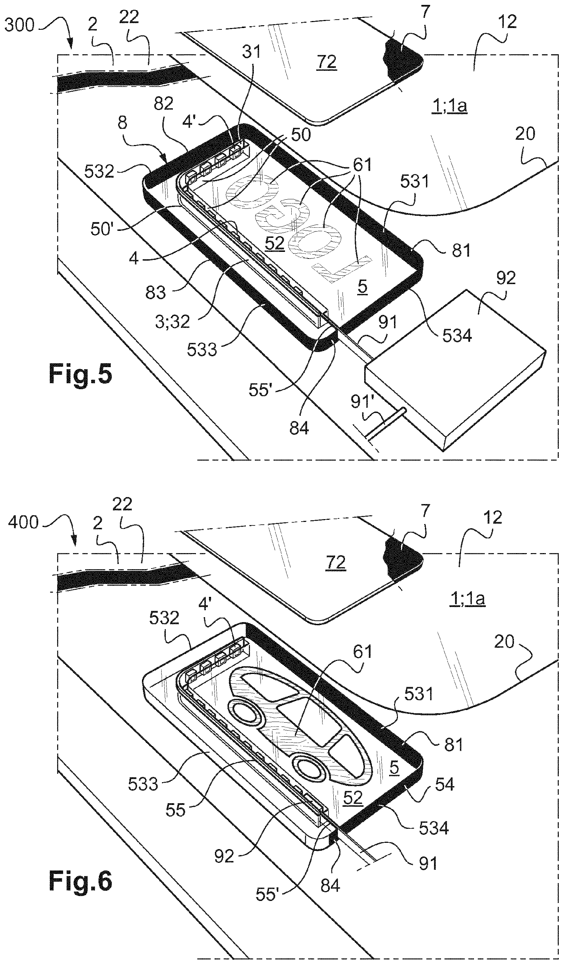

La figure 5 représente une vue schématique partielle en perspective d'un vitrage lumineux 300 dans un troisième mode de réalisation selon l'invention.

Le vitrage 300 diffère du vitrage 200 du deuxième mode de réalisation en ce que :
- le ruban adhésif opaque sur le pourtour 531 à 534 du guide de lumière 5 est remplacé par une peinture noire 81 à 84
- les diodes 4' sur le petit côté du L émettent des couleurs différentes pour des effets lumineux.

La figure 6 représente une vue schématique partielle en perspective et en éclaté d'un vitrage lumineux 400 selon l'invention dans un quatrième mode de réalisation.

Le vitrage 400 diffère du vitrage 200 du deuxième mode de réalisation en ce que :
- le ruban adhésif opaque sur le pourtour du guide est remplacé par une couche (peinture) noire 81' 82' sur au moins les deux tranches 531 et 534 en face des parois de couplage des diodes 4
- le motif 61 est un pictogramme ici une voiture verte indiquant une ouverture de porte (ou coffre) ou rouge une fermeture de porte (ou coffre) ou même blanche ou jaune indiquant que le véhicule a détecté l'utilisateur du véhicule à proximité (en lien avec un détecteur de présence par exemple)
- les moyens de commande 92 sont sur le premier support de diodes 3, dans la cavité 55.

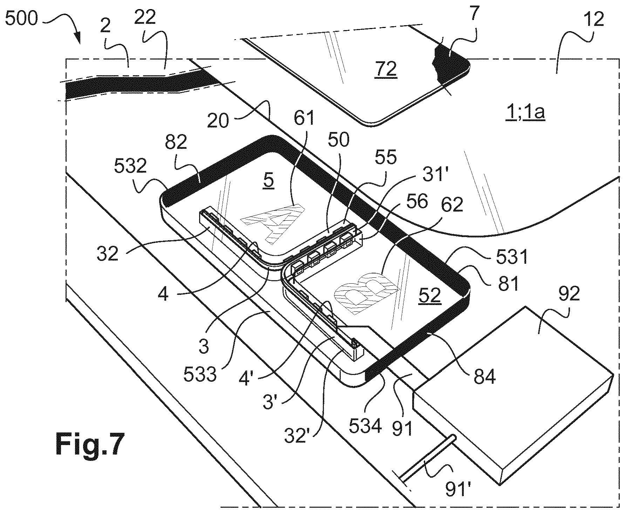

La figure 7 représente une vue schématique partielle en perspective et en éclaté d'un vitrage lumineux 500 dans un cinquième mode de réalisation selon l'invention.

Le vitrage 500 diffère du vitrage 200 du deuxième mode de réalisation en ce que :
- la cavité 55 loge une deuxième source lumineuse (diodes 4' sur deuxième support de diode 3') dos à dos avec la première source lumineuse 4 et une paroi 56, délimitant la cavité 55 étant couplée optiquement à la deuxième source lumineuse, le guide de lumière présentant des deuxièmes moyens d'extractions de lumière (motif 62 sur la face externe 51 séparés des premiers moyens d'extractions de lumière 61 par la cavité 55 en double L,
- le ruban adhésif opaque sur le pourtour est remplacé par une peinture noire 81, 82 sur au moins les deux tranches 531 et 534 (et même la tranche 533) en face des parois de couplage des diodes 4
- le guide de lumière 4 ne comporte pas de rainure de guidage du cablage 91, ce dernier sort par le haut entre l'élément arrière de masquage 7 et la face interne Fi 52 du guide 5.

Le motif 61 peut être une signalétique illuminé indépendamment du motif 62 et avec une fonction totalement distincte.

La figure 8 représente une vue schématique partielle en perspective et en éclaté d'un vitrage lumineux 600 dans un sixième mode de réalisation selon l'invention.

Le vitrage 600 diffère du vitrage 200 du deuxième mode de réalisation en ce que :
- les diodes 4 ne sont pas dans une cavité du guide 5 mais en regard d'une tranche 531 dite tranche de couplage optique (coté bord interne 20)
- le ruban adhésif opaque sur le pourtour est remplacé par une peinture noire 82, 83, 84 sur au moins les trois tranches 532, 533 et 534 en face de la tranche de couplage 531 des diodes 4

Le support de diodes 3 peut être collé à la tranche de couplage par sa face avant 31.

La figure 8' représente une vue schématique partielle en perspective et en éclaté d'un vitrage lumineux 700 dans un septième mode de réalisation selon l'invention. La figure 9 représente une vue schématique partielle en perspective et en éclaté du vitrage lumineux 700 du septième mode de réalisation.

Le vitrage 700 diffère du vitrage 200 du deuxième mode de réalisation en ce que :
- les diodes 4 ne sont pas dans une cavité du guide 5 mais sur tout le pourtour de la tranche 53 du guide, on peut choisir quatre ensembles de diodes 4, 4', 4a, 4b sur de supports distincts 3, 3', 3a, 3b liés entre eux par liaison 33 pour les quatre tranches longitudinales et latérales du guide 4 rectangulaire, on peut avoir un ou des supports de diodes communs alternativement (support flexible à cet effet)
- le ruban adhésif opaque sur la tranche 53 est supprimé car les supports de diodes 3, 3', 3a, 3b sont opaques

Chaque support de diodes 3, 3', 3a, 3b peut être collé à la tranche de couplage par sa face avant.

Le vitrage lumineux 700 comporte en outre un capot de masquage 7' (cf. figure 9), par exemple plastique noir ou blanc, des sources lumineuses, des supports de source et ici aussi des moyens de commande 92, ledit capot couvrant l'élément arrière de masquage, éventuellement fixant le guide de lumière sur la face F2. Le capot 7' est aussi masqué de l'extérieur par la zone de masquage 2.

Ce capot peut aussi servir dans les autres modes de réalisations notamment des figures 8 et 8' pour protéger les diodes 4.

La figure 9' représente une vue schématique partielle en perspective et en éclaté du vitrage lumineux 800 dans un huitième mode de réalisation selon l'invention.

Le vitrage 800 diffère du vitrage 600 du sixième mode de réalisation en ce que :
- les diodes 4 sont à émission latérale, la face arrière du support de diodes 3 étant fixée sur la face F2
- la face avant du support de diode 3 comporte les moyens de commande des diodes 92
- la tranche de couplage 533 est la tranche longitudinale côté bord externe de la couche de masquage 2, la peinture noire 81, 82, 84 est sur les autres tranches du guide 5.

Le vitrage lumineux 800 comporte en outre un capot de masquage 7' avec des rebords opaques 73 et une face externe visible et opaque 72', par exemple plastique noir ou blanc, afin de masquer les diodes et le support de diode 3, ledit capot couvrant l'élément arrière de masquage, éventuellement fixant le guide de lumière 5 sur la face F2. Le capot 7' est aussi masqué de l'extérieur par la zone de masquage 2.

La figure 10 représente une vue schématique partielle de face du vitrage lumineux 900 dans un neuvième mode de réalisation selon l'invention.

Le vitrage 900 diffère du vitrage 600 du sixième mode de réalisation en ce que :
- le guide de lumière 5 dépasse dans une zone dite zone périphérique dénuée d'encapsulation 90 (laissant visible la tranche 13 de la feuille 3 et le bord externe de masquage 20') notamment logeable entre une garniture de véhicule et une carrosserie du véhicule en position montée
- la tranche de couplage du guide 5 est la tranche longitudinale la plus proche de la tranche 13 de la feuille 1, la peinture noire (ou un scotch opaque) 81, 82, 83 est sur les autres tranches
- la face avant du support de diode 3 comporte un adhésif 34 de fixation à la tranche du guide 5 et les moyens de commande des diodes (non montrés)
- la face avant du support de diode 3 comporte les moyens de commande des diodes (non montrés) relié à un câblage (non montré) notamment logeable entre une garniture de véhicule et une carrosserie du véhicule en position montée et raccordé à une unité de contrôle du véhicule.

Le vitrage lumineux 900 peut comporter en outre un capot de masquage (non montré) avec des rebords opaques et une face externe visible et opaque, par exemple plastique noir ou blanc, afin de masquer les diodes et le support de diodes 3, ledit capot couvrant l'élément arrière de masquage.

La figure 11 représente, dans un dixième mode de réalisation de vitrage lumineux 1000, une vue schématique montrant respectivement de gauche à droite quatre configurations a), b), c) et d) par ordre décroissant de préférence de superposition (de gauche à droite) - de l'élément arrière de masquage 7, qui est en réalisation préférée, un fond couvrant opaque en a), b) et c) ou reproduisant (de même taille ou en plus grand) les motifs diffusants 61 en d)
- du guide de lumière 5 avec les motifs diffusants 61 sous forme de signalétique en a), c) et d) ou formant un fond diffusant en b)
- et de la zone de masquage 2 avec la première épargne 25 reproduisant la signalétique du motif diffusant 61 en a) et d) ou formant la signalétique en b) ou encore formant une épargne cadre en c) laissant visible les motifs 61.

La figure 12 représente dans un onzième mode de réalisation selon l'invention une vue schématique de côté d'une voiture 1100 intégrant des vitrages lumineux fixes selon l'invention (vitre latérale de préférence simple, pare-brise notamment feuilleté, lunette de préférence simple) notamment :
- avec un clair de vitre 11a
- sur la face F2 un cadre de masquage 2 par exemple en émail noir ou gris (visible par transparence de la face 11 dite F1) et cadre de masquage comportant au moins une première épargne 25.

La figure 13 représente dans un douzième mode de réalisation une vue schématique de côté d'une camionnette 1200 intégrant des vitrages lumineux selon l'invention fixes selon l'invention (vitre latérale, pare-brise, lunette) notamment avec un clair de vitre, un cadre de masquage 2 (visible par transparent de la face 11 dite F1) et comportant au moins une première épargne 25 sur la face F2.

La figure 14 représente dans un treizième mode de réalisation selon l'invention une vue schématique et partielle en perspective de l'avant d'une voiture 1300 intégrant un pavillon (ou en variante une lamelle avant) comportant un bord, s'étendant en bordure supérieure du pare-brise, avec une bande de masquage 2 comportant la première épargne 25.

Il s'agit d'un vitrage simple par exemple en plastique (PMMA, PC) ou d'un vitrage feuilleté.

## Revendications

1. Vitrage lumineux (100 à 1000) pour véhicule automobile (1100, 1200, 1300), comprenant :
- une première feuille (1) transparente, avec une première face principale F1 (11) destinée à être dirigée vers l'extérieur du véhicule, une deuxième face principale F2 (12) destinée à être dirigée vers l'intérieur du véhicule et un chant (13),
- en regard d'une des faces F1 ou F2, une zone de masquage (2), en une matière opaque, zone de masquage de largeur W d'au moins 0,8cm,
- une première épargne (25) dans la zone de masquage,
- une première source lumineuse (4),
la lumière émise par la première source lumineuse étant visible du côté de la face F1 en sortant par la première épargne
**caractérisé en ce que** le vitrage lumineux comporte en outre :
- du côté de la face F2, un élément transparent (5), avec une face principale externe Fe (51) orientée côté face F2 et une face principale interne (52) Fi et une tranche,
la première source lumineuse étant couplée optiquement audit élément transparent, la lumière émise par la première source lumineuse étant guidée dans ledit élément transparent dit guide de lumière, la face principale externe Fe du guide de lumière étant en regard de la première épargne et derrière la zone de masquage
- des premiers moyens d'extraction de lumière (61) aptes à extraire la lumière guidée dans ledit guide de lumière, les premiers moyens d'extraction de lumière étant en regard de la première épargne de sorte que un ou des motifs illuminés sont visibles du côté de la face F1
- côté face F2, un élément arrière de masquage (7), opaque, couvrant les premiers moyens d'extraction de lumière, les premiers moyens d'extraction de lumière étant entre la face F2 et l'élément arrière de masquage,
lorsque la première source lumineuse émet dans l'ultraviolet, le dispositif lumineux comporte une couche à base de luminophore fluorescent apte à convertir la lumière ultraviolette extraite en lumière visible
lorsque la première feuille présente un clair de vitre (1 1a), la première source lumineuse (4), un éventuel premier support de la première source lumineuse, dit premier support de source, l'élément arrière de masquage (7) sont absents du clair de vitre et de préférence le guide de lumière est absent du clair de vitre,
les premiers moyens d'extraction étant sous forme d'un ou plusieurs premiers motifs espacés Mi (61), lorsque la première source lumineuse est en fonctionnement le ou les motifs Mi illuminés étant visibles du côté de la face F1, et/ou la première épargne est formée d'un ou plusieurs motifs espacés Me, de sorte que lorsque la première source lumineuse est en fonctionnement un ou des motifs illuminés Me sont visibles du côté de la face F1.

2. Vitrage lumineux selon la revendication 1 **caractérisé en ce que** la zone de masquage (2), opaque est de couleur C1 noire ou grise et l'élément arrière de masquage, opaque, notamment un fond couvrant, est de couleur C2 identique ou similaire à C1 notamment de couleur noire ou grise.

3. Vitrage lumineux selon l'une quelconque des revendications précédentes **caractérisé en ce que** la première source lumineuse (4) est masquée de l'extérieur c'est-à-dire invisible du côté de la face F1 (11), masquée par la zone de masquage (2) et/ou tout ou partie décalée de la face F2 notamment logeable entre une garniture de véhicule et une carrosserie du véhicule en position montée et de préférence un premier support de la première source lumineuse dit premier support de source est masqué de l'extérieur c'est-à-dire invisible du côté de la face F1 (11), masquée par la zone de masquage et/ou tout ou partie décalé de la face F2, avec éventuellement la première source lumineuse, notamment logeable entre une garniture de véhicule et une carrosserie du véhicule en position montée.

4. Vitrage lumineux (900) selon l'une quelconque des revendications précédentes **caractérisé en ce que** la première source lumineuse (4) est montée sur un premier support dit premier support de source (3) dépassant du chant de la première feuille transparente (1) dans une zone (13) dite zone périphérique dénuée d'encapsulation, premier support de source notamment logeable entre une garniture de véhicule et une carrosserie du véhicule en position montée, et/ou le guide de lumière (5) dépasse dans une zone dite zone périphérique dénuée d'encapsulation notamment logeable entre une garniture de véhicule et une carrosserie du véhicule en position montée.

5. Vitrage lumineux selon l'une quelconque des revendications précédentes **caractérisé en ce qu'**il comporte un capot de masquage (7, 7') de la première source lumineuse (4) et éventuellement d'un premier support de source de la première source lumineuse dit premier support de source (3), de moyens de commande (92) éventuels, du guide de lumière (5), ledit capot (7') couvrant l'élément arrière de masquage ou le capot (7) formant l'élément arrière de masquage, éventuellement fixant le guide de lumière sur la face F2, capot masqué de l'extérieur par la zone de masquage (2) et éventuellement en partie dépassant du chant de la première feuille notamment logeable entre une garniture de véhicule et une carrosserie du véhicule en position montée.

6. Vitrage lumineux selon l'une quelconque des revendications précédentes **caractérisé en ce qu'**il comporte des moyens de commande (92) de la première source lumineuse sur un premier support de la première source lumineuse dit premier support de source (3), en particulier la première source lumineuse étant allumée en fonction de consigne(s) et/ou de préférence les motifs Me et/ou MI forment une signalétique ou un décor ou une signalisation.

7. Vitrage lumineux selon l'une quelconque des revendications précédentes **caractérisé en ce qu'**il comporte un câblage électrique alimentant la première source lumineuse et une encapsulation polymérique de la première feuille, en une matière d'encapsulation qui couvre le cablage électrique et le faire sortir dans une zone notamment de raccordement du cablage dans le véhicule telle qu'un bord ou coin adjacent ou opposé au bord de la première feuille le plus proche de la première épargne.

8. Vitrage lumineux selon l'une quelconque des revendications précédentes **caractérisé en ce que** les premiers moyens d'extraction de lumière (61) s'inscrivent dans une surface SL, l'élément arrière de masquage est un fond de masquage et s'inscrit dans un surface SF avec un périmètre PF, SF couvre SL et est supérieure ou égale à SL.

9. Vitrage lumineux selon l'une quelconque des revendications précédentes **caractérisé en ce que** l'élément arrière de masquage (7) couvre sensiblement la face interne Fi (52) du guide de lumière lorsque le guide de lumière est circonscrit dans la zone de masquage ou lorsque le guide de lumière dépasse du chant de la première feuille, l'élément arrière de masquage couvre au moins la région de la face Fi qui fait face à la face F2.

10. Vitrage selon l'une quelconque des revendications précédentes **caractérisé en ce que** l'élément arrière de masquage est sur la face interne Fi du guide de lumière (52), de préférence formant un fond de masquage, est choisi parmi :
- une plaque opaque,
- un revêtement opaque notamment sur une feuille,
- la plaque d'un capot opaque présentant en outre une ou des parois ou rebords opaques en regard de la tranche du guide de lumière et couvrant la tranche.
et la face externe (51) du guide de lumière est de préférence posée ou collée par un adhésif périphérique formant éventuellement un cadre ou par des points de colle, posée ou collée sur la face F2 ou sur une deuxième feuille transparente feuilletée par un intercalaire de feuilletage polymérique à la première feuille transparente.

11. Vitrage lumineux selon l'une quelconque des revendications précédentes **caractérisé en ce que** la première épargne est formée d'un ou plusieurs motifs espacés Me et de préférence les premiers moyens d'extraction de lumière sont sous forme dudit ou desdits premiers motifs espacés Mi (6i) et de forme sensiblement identiques à Me et coïncidant avec le ou les motifs Me ou agrandis de manière homothétique.

12. Vitrage lumineux selon l'une quelconque des revendications précédentes **caractérisé en ce que** le vitrage lumineux comporte des moyens de piégeage, et de préférence d'absorption, de la lumière guidée susceptible de sortir par la tranche du guide de lumière de préférence choisis parmi :
- une couche opaque sur la tranche du guide de lumière ou sur un élément contre ou espacée d'au plus 1 cm de la tranche du guide
- un ruban adhésif opaque sur la tranche du guide de lumière
- une ou des parois ou rebords opaques d'un capot couvrant l'élément arrière de masquage ou formant ledit élément arrière de masquage, parois sur ou espacées d'au plus 1cm de la tranche du guide de lumière
- un premier support de la première source lumineuse, dit premier support de source notamment ceinturant la tranche du guide de lumière ou un deuxième support de source lumineuse sur lequel est montée une deuxième source lumineuse
et **en ce que** de préférence la première source lumineuse est couplée optiquement à une première tranche du guide dite tranche de couplage ou à une paroi d'une cavité du guide dite paroi de couplage optique, et le vitrage comporte de préférence en outre un élément opaque en regard de la tranche de couplage optique ou de la paroi de couplage optique et espacée d'au plus 1cm, qui est un premier support de la première source lumineuse, dit premier support de source, ou une paroi ou rebord opaque d'un capot couvrant l'élément arrière de masquage ou formant ledit élément arrière de masquage.

13. Vitrage lumineux selon l'une quelconque des revendications précédentes **caractérisé en ce que** l'une quelconque des revendications précédentes **caractérisé en ce que** le vitrage est simple, la face F1 est la face destinée à être la face extérieure du véhicule, la face F2 est la face destinée à être la face intérieure du véhicule et la zone de masquage (2) est une couche sur la face F2, et **en ce que** la face externe (51) du guide de lumière est de préférence posée sur la face F2 ou collée à la face F2 par un adhésif de préférence périphérique, et **en ce que** de préférence le guide de lumière est en plastique notamment polycarbonate, polyester ou PMMA.

14. Vitrage lumineux selon l'une quelconque des revendications précédentes **caractérisé en ce que** la première source lumineuse (4) est un ensemble de diodes électroluminescentes inorganiques sur une face avant d'un premier support dit premier support de source, et éventuellement comporte une deuxième source lumineuse qui est un ensemble de diodes électroluminescentes inorganiques sur la face arrière dudit premier support de source ou sur un deuxième support dit deuxième support de source, notamment les diodes étant à émission frontale ou latérale.

15. Vitrage lumineux selon l'une quelconque des revendications précédentes **caractérisé en ce que** le guide de lumière (5) présente une cavité (55) borgne ou traversante dans l'épaisseur, notamment linéaire et même coudée, logeant la première source lumineuse, une première paroi délimitant la cavité étant couplée optiquement à la première source lumineuse.

16. Vitrage lumineux selon la revendication précédente **caractérisé en ce que** le guide de lumière (5) , notamment plastique, présente une cavité (55') , borgne ou traversante dans l'épaisseur, de guidage du cablage électrique (91) alimentant la première source lumineuse.

17. Vitrage lumineux selon l'une des revendications 15 ou 16 **caractérisé en ce que** la cavité loge une deuxième source lumineuse, notamment dos à dos avec la première source lumineuse, et une paroi délimitant la cavité étant couplée optiquement à la deuxième source lumineuse et le guide de lumière présentant des deuxièmes moyens d'extractions de lumière séparés des premiers moyens d'extractions de lumière par la cavité.

18. Vitrage lumineux selon l'une quelconque des revendications précédentes **caractérisé en ce que** l'épaisseur totale de l'ensemble guide de lumière, l'élément arrière de masquage et éventuel capot couvrant l'élément arrière de masquage est d'au plus 10mm notamment de 2 à 10mm et même 3 à 5mm, notamment lorsque la première source lumineuse est un ensemble de diodes électroluminescentes inorganiques à émission latérale avec des faces émettrices d'au plus 1,5mm, l'épaisseur du guide de lumière est d'au plus 2mm et même d'au plus 1,5mm.

19. Vitrage lumineux selon l'une quelconque des revendications précédentes **caractérisé en ce qu'**il forme:
- une vitre latérale de préférence fixe, en particulier une custode ou un déflecteur, fixe de porte avant, fixe de porte arrière.
- une lunette arrière ou un pare-brise, la première épargne étant une bande latérale et/ou longitudinale de la zone de masquage en cadre de préférence sur la face F2.
- un toit, pavillon ou une lamelle avant comportant un bord longitudinal inférieur destiné à s'étendre en bordure longitudinal supérieure d'un pare-brise, la première épargne étant une bande longitudinale inférieure de la zone de masquage.

20. Véhicule comportant au moins un vitrage lumineux selon l'une quelconque des revendications précédentes.

## Patentansprüche

1. Leuchtverglasung (100 bis 1000) für Kraftfahrzeuge (1100, 1200, 1300), umfassend:
- eine erste transparente Scheibe (1) mit einer ersten Hauptfläche F1 (11), die dazu bestimmt ist, zum Äußeren des Fahrzeugs gerichtet zu sein, eine zweite Hauptfläche F2 (12), die dazu bestimmt ist, zum Inneren des Fahrzeugs gerichtet zu sein, und eine Schmalseite (13),
- gegenüber einer der Flächen F1 oder F2, eine Maskierungszone (2) aus einem lichtundurchlässigen Material, wobei die Maskierungszone eine Breite W von mindestens 0,8 cm aufweist,
- einen ersten Aufdruck (25) in der Maskierungszone,
- eine erste Lichtquelle (4),
wobei das Licht, das durch die erste Lichtquelle emittiert wird, auf der Seite der Fläche F1 sichtbar ist, indem es durch den ersten Aufdruck austritt
**dadurch gekennzeichnet, dass** die Leuchtverglasung ferner beinhaltet:
- auf der Seite der Fläche F2, ein transparentes Element (5) mit einer äußeren Hauptfläche Fe (51), die seitlich auf die Fläche F2 ausgerichtet ist, und einer inneren Hauptfläche (52) Fi und einem Rand,
wobei die erste Lichtquelle mit dem transparenten Element optisch gekoppelt ist, wobei das Licht, das durch die erste Lichtquelle emittiert wird, in das transparente Element, Lichtleiter genannt, geleitet wird, wobei die äußere Hauptfläche Fe des Lichtleiters dem ersten Aufdruck gegenüberliegt und hinter der Maskierungszone ist
- wobei erste Lichtextraktionsmittel (61) geeignet sind, das in dem Lichtleiter geleitete Licht zu extrahieren, wobei die ersten Lichtextraktionsmittel dem ersten Aufdruck gegenüberliegen, sodass ein oder mehrere beleuchtete Motive auf der Seite der Fläche F1 sichtbar sind
- seitlich der Fläche F2, ein rückwärtiges Maskierungselement (7), das lichtundurchlässig ist, das die ersten Lichtextraktionsmittel abdeckt, wobei die ersten Lichtextraktionsmittel zwischen der Fläche F2 und dem rückwärtigen Maskierungselement sind,
wenn die erste Lichtquelle in einem ultravioletten Bereich emittiert, die Leuchtvorrichtung eine Schicht auf der Basis eines fluoreszierenden Leuchtstoffs beinhaltet, der geeignet ist, das extrahierte ultraviolette Licht in sichtbares Licht umzuwandeln
wenn die erste Scheibe eine Glasklarheit (11a) aufweist, die erste Lichtquelle (4), ein eventueller erster Träger der ersten Lichtquelle, genannt der erste Quellenträger, das rückwärtige Maskierungselement (7) von der Glasklarheit abwesend sind, und vorzugsweise der Lichtleiter von der Glasklarheit abwesend ist,
wobei die ersten Extraktionsmittel in Form von einem oder mehreren ersten beabstandeten Motiven Mi (61) vorliegen, wenn die erste Lichtquelle in Betrieb ist, das oder die beleuchteten Motive Mi auf der Seite der Fläche F1 sichtbar sind, und/oder der erste Aufdruck aus einem oder mehreren beabstandeten Motiven Me ausgebildet ist, sodass, wenn die erste Lichtquelle in Betrieb ist, ein oder mehrere beleuchtete Motive Me auf der Seite der Fläche F1 sichtbar sind.

2. Leuchtverglasung nach Anspruch 1, **dadurch gekennzeichnet, dass** die lichtundurchlässige Maskierungszone (2) eine schwarze oder graue Farbe C1 hat, und das lichtundurchlässige rückwärtige Maskierungselement, insbesondere ein deckender Hintergrund, eine identische oder ähnliche Farbe C2 wie C1, insbesondere eine schwarze oder graue Farbe hat.

3. Leuchtverglasung nach einem der vorstehenden Ansprüche,
**dadurch gekennzeichnet, dass** die erste Lichtquelle (4) von außen maskiert ist, d. h. unsichtbar von der Seite der Fläche F1 (11), die durch die Maskierungszone (2) maskiert ist, und/oder die gesamte oder ein versetzter Teil der Fläche F2, die insbesondere zwischen einer Fahrzeugverkleidung und einer Karosserie des Fahrzeugs in montierter Position untergebracht werden kann, und vorzugsweise ein erster Träger der ersten Lichtquelle, genannt der erste Quellenträger, von außen maskiert ist, d. h. unsichtbar von der Seite der Fläche F1 (11), die durch die Maskierungszone maskiert ist, und/oder die gesamte oder ein versetzter Teil der Fläche F2, mit optional der ersten Lichtquelle, insbesondere zwischen einer Fahrzeugverkleidung und einer Karosserie des Fahrzeugs in montierter Position untergebracht werden kann.

4. Leuchtverglasung (900) nach einem der vorstehenden Ansprüche, **dadurch gekennzeichnet, dass** die erste Lichtquelle (4) auf einem ersten Träger, genannt der erste Quellenträger (3), montiert ist, der über die Schmalseite der ersten transparenten Scheibe (1) in einer Zone (13), genannt die Umfangszone, die frei von Einkapselung ist, hinausragt, wobei der erste Quellenträger, der insbesondere zwischen einer Fahrzeugverkleidung und einer Karosserie des Fahrzeugs in montierter Position untergebracht werden kann, und/oder der Lichtleiter (5) in eine Zone, genannt die Umfangszone, ragt, die frei von Einkapselung ist, der insbesondere zwischen einer Fahrzeugverkleidung und einer Karosserie des Fahrzeugs in montiertem Zustand untergebracht werden kann.

5. Leuchtverglasung nach einem der vorstehenden Ansprüche,
**dadurch gekennzeichnet, dass** sie eine Maskierungshaube (7, 7') der ersten Lichtquelle (4) und optional eines ersten Quellenträgers der ersten Lichtquelle, genannt der erste Quellenträger (3), eventuelle Steuermittel (92), des Lichtleiters (5) beinhaltet, wobei die Haube (7') das rückwärtige Maskierungselement abdeckt oder die Haube (7) das rückwärtige Maskierungselement ausbildet, optional den Lichtleiter auf der Fläche F2 befestigt, wobei die Maskierungshaube von außen durch die Maskierungszone (2) abgedeckt ist und optional teilweise über die Schmalseite der ersten Scheibe hinausragt, die insbesondere zwischen einer Fahrzeugverkleidung und einer Karosserie des Fahrzeugs in montierter Position untergebracht werden kann.

6. Leuchtverglasung nach einem der vorstehenden Ansprüche,
**dadurch gekennzeichnet, dass** sie Steuermittel (92) der ersten Lichtquelle auf einem ersten Träger der ersten Lichtquelle, genannt der erste Quellenträger (3), beinhaltet, wobei im Besonderen die erste Lichtquelle in Abhängigkeit von (einem) Sollwert(en) eingeschaltet wird und/oder vorzugsweise die Motive Me und/oder Ml eine Beschilderung oder eine Dekoration oder eine Signalgebung ausbilden.

7. Leuchtverglasung nach einem der vorstehenden Ansprüche,
**dadurch gekennzeichnet, dass** sie eine elektrische Verkabelung, die die erste Lichtquelle versorgt, und eine polymere Einkapselung der ersten Scheibe aus einem Einkapselungsmaterial beinhaltet, das die elektrische Verkabelung abdeckt und sie in einer Zone, insbesondere für einen Anschluss der Verkabelung in dem Fahrzeug, wie einer Kante oder einer Ecke, die an die Kante der ersten Scheibe, die dem ersten Aufdruck am nächsten liegt, angrenzt oder gegenüberliegt, austreten lässt.

8. Leuchtverglasung nach einem der vorstehenden Ansprüche,
**dadurch gekennzeichnet, dass** die ersten Lichtextraktionsmittel (61) in einer Oberfläche SL aufgenommen sind, das rückwärtige Maskierungselement ein Maskierungshintergrund ist und in eine Oberfläche SF mit einem Umfang PF aufgenommen ist, wobei SF SL abdeckt und größer oder gleich SL ist.

9. Leuchtverglasung nach einem der vorstehenden Ansprüche,
**dadurch gekennzeichnet, dass** das rückwärtige Maskierungselement (7) im Wesentlichen die innere Fläche Fi (52) des Lichtleiters abdeckt, wenn der Lichtleiter innerhalb der Maskierungszone umgrenzt ist, oder wenn der Lichtleiter über die Schmalseite der ersten Scheibe hinausragt, wobei das rückwärtige Maskierungselement mindestens die Region der Fläche Fi abdeckt, die der Fläche F2 zugewandt ist.

10. Verglasung nach einem der vorstehenden Ansprüche,
**dadurch gekennzeichnet, dass** das rückwärtige Maskierungselement auf der inneren Fläche Fi des Lichtleiters (52) ist, vorzugsweise einen Maskierungshintergrund ausbildet, der ausgewählt ist aus:
- einer lichtundurchlässigen Platte,
- einer lichtundurchlässigen Beschichtung, insbesondere auf einer Scheibe,
- wobei die Platte einer lichtundurchlässigen Haube ferner eine oder mehrere lichtundurchlässige Wände oder Randleisten aufweist, die dem Rand des Lichtleiters gegenüberliegen und den Rand abdecken,
und die äußere Fläche (51) des Lichtleiters vorzugsweise durch ein umlaufendes Haftmittel, das optional einen Rahmen ausbildet, oder durch Klebepunkte aufgelegt oder geklebt wird, auf die Fläche F2 oder auf eine zweite transparente Scheibe, die durch eine polymere Zwischenlage mit der ersten transparenten Scheibe laminiert ist, aufgelegt oder geklebt wird.

11. Leuchtverglasung nach einem der vorstehenden Ansprüche,
**dadurch gekennzeichnet, dass** der erste Aufdruck aus einem oder mehreren beabstandeten Motiven Me ausgebildet ist, und vorzugsweise die ersten Lichtextraktionsmittel in Form des einen oder der mehreren ersten beabstandeten Motive Mi (6i) und in einer Form sind, die im Wesentlichen mit Me identisch ist und mit dem einen oder den mehreren Motiven Me übereinstimmt oder homothetisch vergrößert ist.

12. Leuchtverglasung nach einem der vorstehenden Ansprüche,
**dadurch gekennzeichnet, dass** die Leuchtverglasung Mittel zum Einfangen und vorzugsweise für eine Absorption des geleiteten Lichts, das an dem Rand des Lichtleiters austreten kann, beinhaltet, die vorzugsweise ausgewählt sind aus:
- einer lichtundurchlässigen Schicht auf dem Rand des Lichtleiters oder auf einem Element, das gegen den Rand des Leiters anliegt oder höchstens um 1 cm von diesem beabstandet ist
- einem lichtundurchlässigen Haftmittelband auf dem Rand des Lichtleiters
- einer oder mehreren lichtundurchlässigen Wänden oder Randleisten einer Haube, die das rückwärtige Maskierungselement abdeckt, oder das rückwärtige Maskierungselement ausbildet, wobei die Wände auf dem Rand des Lichtleiters liegen oder höchstens um 1 cm von diesem beabstandet sind
- einem ersten Träger der ersten Lichtquelle, genannt der erste Quellenträger, der insbesondere den Rand des Lichtleiters umgibt, oder einem zweiten Quellenträger, auf dem eine zweite Lichtquelle montiert ist
und **dadurch, dass** vorzugsweise die erste Lichtquelle an einen ersten Rand des Leiters, genannt der Kopplungsrand, oder an eine Wand eines Hohlraums des Leiters, genannt die optische Kopplungswand, optisch gekoppelt ist, und die Verglasung vorzugsweise ferner ein lichtundurchlässiges Element beinhaltet, das dem optischen Kopplungsrand oder der optischen Kopplungswand gegenüberliegt und höchstens um 1 cm beabstandet ist, das ein erster Träger der ersten Lichtquelle, genannt der erste Quellenträger, oder eine lichtundurchlässige Wand oder Randleiste einer Haube ist, die das rückwärtige Maskierungselement abdeckt oder das rückwärtige Maskierungselement ausbildet.

13. Leuchtverglasung nach einem der vorstehenden Ansprüche,
**dadurch gekennzeichnet, dass** einer der vorstehenden Ansprüche **dadurch gekennzeichnet ist, dass** die Verglasung einfach ist, die Fläche F1 die Fläche ist, die dazu bestimmt ist, die äußere Fläche des Fahrzeugs zu sein, wobei die Fläche F2 die Fläche ist, die dazu bestimmt ist, die innere Fläche des Fahrzeugs zu sein, und die Maskierungszone (2) eine Schicht auf der Fläche F2 ist, und wobei die äußere Fläche (51) des Lichtleiters vorzugsweise auf die Fläche F2 aufgelegt oder auf die Fläche F2 durch ein vorzugsweise umlaufendes Haftmittel geklebt ist, und wobei vorzugsweise der Lichtleiter aus Kunststoff, insbesondere Polycarbonat, Polyester oder PMMA, besteht.

14. Leuchtverglasung nach einem der vorstehenden Ansprüche,
**dadurch gekennzeichnet, dass** die erste Lichtquelle (4) eine Anordnung von anorganischen lichtemittierenden Dioden auf einer Fläche vor einem ersten Träger, genannt der erste Quellenträger, ist, und optional eine zweite Lichtquelle beinhaltet, die eine Anordnung von anorganischen lichterzeugenden Dioden auf der Fläche hinter dem ersten Quellenträger oder auf einem zweiten Träger, genannt der zweite Quellenträger, ist, wobei insbesondere die Dioden von vorne oder lateral emittieren.

15. Leuchtverglasung nach einem der vorstehenden Ansprüche,
**dadurch gekennzeichnet, dass** der Lichtleiter (5) einen Hohlraum (55), der in der Dicke blind oder durchgehend, insbesondere linear und sogar abgewinkelt ist, aufweist, der die erste Lichtquelle unterbringt, wobei eine erste Wand, die den Hohlraum begrenzt, mit der ersten Lichtquelle optisch gekoppelt ist.

16. Leuchtverglasung nach einem der vorstehenden Ansprüche,
**dadurch gekennzeichnet, dass** der Lichtleiter (5), insbesondere aus Kunststoff, einen Hohlraum (55') aufweist, der in der Dicke blind oder durchgehend ist, zum Leiten der elektrischen Verkabelung (91), die die erste Lichtquelle versorgt.

17. Leuchtverglasung nach einem der Ansprüche 15 oder 16,
**dadurch gekennzeichnet, dass** der Hohlraum eine zweite Lichtquelle unterbringt, insbesondere Rücken an Rücken mit der ersten Lichtquelle, und eine den Hohlraum begrenzende Wand mit der zweiten Lichtquelle optisch gekoppelt ist, und der Lichtleiter zweite Lichtextraktionsmittel aufweist, die durch den Hohlraum von den ersten Lichtextraktionsmitteln getrennt sind.

18. Leuchtverglasung nach einem der vorstehenden Ansprüche,
**dadurch gekennzeichnet, dass** die Gesamtdicke der Lichtleiteranordnung, des rückwärtigen Maskierungselements und einer eventuellen Haube, die das rückwärtige Maskierungselement abdeckt, höchstens 10 mm, insbesondere von 2 bis 10 mm und sogar 3 bis 5 mm beträgt, insbesondere wenn die erste Lichtquelle eine Anordnung von anorganischen lichtemittierenden Dioden lateraler Emission mit emittierenden Flächen von höchstens 1,5 mm ist, wobei die Dicke des Lichtleiters höchstens 2 mm und sogar höchstens 1,5 mm beträgt.

19. Leuchtverglasung nach einem der vorstehenden Ansprüche,
**dadurch gekennzeichnet, dass** sie Folgendes ausbildet:
- ein laterales Fenster, vorzugsweise befestigt, im Besonderen eine hintere Seitenscheibe oder ein Ausstellfenster, befestigt an der Vordertür, befestigt an der Hintertür.
- eine Heckscheibe oder eine Windschutzscheibe, wobei der erste Aufdruck ein Lateral- und/oder Längsstreifen der Maskierungszone in dem Rahmen vorzugsweise auf der Fläche F2 ist.
- ein Dach, eine Dachhaut oder eine Frontlamelle, das/die eine unteren Längskante, die dazu bestimmt ist, sich in die obere Längseinfassung einer Windschutzscheibe zu erstrecken, beinhaltet, wobei der erste Aufdruck ein unterer Längsstreifen der Markierungszone ist.

20. Fahrzeug, das mindestens eine Leuchtverglasung nach einem der vorstehenden Ansprüche vorweist.

## Claims

1. Light glazing (100 to 1000) for a motor vehicle (1100, 1200, 1300), comprising:
- a first transparent sheet (1), with a first main face F1 (11) intended to be directed toward the outside of the vehicle, a second main face F2 (12) intended to be directed toward the interior of the vehicle and an edge (13),
- facing one of the faces F1 or F2, a masking zone (2), made of an opaque material, a masking zone of width W of at least 0.8cm,
- a first unmasked zone (25) in the masking zone,
- a first light source (4),
the light emitted by the first light source being visible on the side of the face F1 leaving through the first unmasked zone
**characterized in that** the light glazing also comprises:
- on the side of the face F2, a transparent element (5), with an outer main face Fe (51) oriented on the face F2 side and an inner main face (52) Fi and a rim,
the first light source being coupled optically to said transparent element, the light emitted by the first light source being guided in said transparent element, called light guide, the outer main face Fe of the light guide being opposite the first unmasked zone and behind the masking zone
- first light extraction means (61) capable of extracting the light guided in said light guide, the first light extraction means being opposite the first unmasked zone so that one or more of the illuminated patterns are visible on the side of the face F1
- on the face F2 side, an opaque rear masking element (7), covering the first light extraction means, the first light extraction means being between the face F2 and the rear masking element,
when the first light source emits in the ultraviolet, the light device comprises a layer based on fluorescent luminophore capable of converting the extracted ultraviolet light into visible light
when the first sheet has a see-throught portion (11a), the first light source (4), a possible first support of the first light source, called first source support, the rear masking element (7) are absent from the see-throught portion and preferably the light guide is absent from the see-throught portion,
the first extraction means being in the form of one or more first spaced-apart patterns Mi (61), when the first light source is in operation the illuminated pattern or patterns Mi being visible on the side of the face F1, and/or the first unmasked zone is formed by one or more spaced-apart patterns Me, so that when the first light source is in operation one or more of the illuminated patterns Me are visible on the side of the face F1.

2. The light glazing as claimed in claim 1, **characterized in that** the opaque masking zone (2) is of black or gray color C1 and the opaque rear masking element, notably a background covering, is of color C2 that is identical or similar to C1, in particular of black or gray color.

3. The light glazing as claimed in either one of the preceding claims, **characterized in that** the first light source (4) is masked from the outside, that is to say invisible on the side of the face F1 (11), masked by the masking zone (2) and/or wholly or partly offset from the face F2, notably able to be housed between a vehicle edge and bodywork of the vehicle in mounted position and preferably a first support of the first light source, called first source support, is masked from the outside, that is to say invisible on the side of the face F1 (11), masked by the masking zone and/or wholly or partly offset from the face F2, possibly with the first light source, notably able to be housed between a vehicle edge and bodywork of the vehicle in mounted position.

4. The light glazing (900) as claimed in any one of the preceding claims, **characterized in that** the first light source (4) is mounted on a first support, called first source support (3), extending from the edge of the first transparent sheet (1) dans a zone (13), called peripheral zone, devoid of encapsulation, a first source support notably able to be housed between a vehicle edge and bodywork of the vehicle in mounted position, and/or the light guide (5) extends into a zone, called peripheral zone devoid of encapsulation, notably able to be housed between a vehicle edge and bodywork of the vehicle in mounted position.

5. The light glazing as claimed in any one of the preceding claims, **characterized in that** it comprises a masking cover (7, 7') masking the first light source (4) and possibly a first source support of the first light source called first source support (3), possible control means (92), of the light guide (5), said cover (7') covering the rear masking element or the cover (7) forming the rear masking element, possibly securing the light guide to the face F2, the cover being masked from the outside by the masking zone (2) and possibly partly extending beyond the edge of the first sheet, notably able to be housed between a vehicle edge and bodywork of the vehicle in mounted position.

6. The light glazing as claimed in any one of the preceding claims, **characterized in that** it comprises control means (92) controlling the first light source on a first support of the first light source called first source support (3), in particular the first light source being switched on according to setpoint(s) and/or preferably the patterns Me and/or MI form signage or decoration or signaling.

7. The light glazing as claimed in any one of the preceding claims, **characterized in that** it comprises electric wiring supplying the first light source and a polymer encapsulation of the first sheet, made of an encapsulation material which covers the electric wiring and makes it exit in a zone, notably of connection of the wiring in the vehicle, such as a border or corner adjacent or opposite to the border of the first sheet closest to the first unmasked zone.

8. The light glazing as claimed in any one of the preceding claims, **characterized in that** the first light extraction means (61) are inscribed in a surface SL, the rear masking element is a masking background and is inscribed in a surface SF with a perimeter PF, SF covers SL and is greater than or equal to SL.

9. The light glazing as claimed in any one of the preceding claims, **characterized in that** the rear masking element (7) covers substantially the inner face Fi (52) of the light guide when the light guide is circumscribed in the masking zone or when the light guide extends beyond the edge of the first sheet, the rear masking element covers at least the region of the face Fi which faces the face F2.

10. The glazing as claimed in any one of the preceding claims, **characterized in that** the rear masking element is on the inner face Fi of the light guide (52), preferably forming a masking background, is chosen from among:
- an opaque plate,
- an opaque covering notably on a sheet,
- the plate of an opaque cover also having one or more opaque walls or flanges opposite the rim of the light guide and covering the rim,
and the outer face (51) of the light guide is preferably fitted or glued by a peripheral adhesive possibly forming a frame or by spots of glue, placed or glued onto the face F2 or onto a second transparent sheet laminated via polymer lamination separator to the first transparent sheet.

11. The light glazing as claimed in any one of the preceding claims, **characterized in that** the first unmasked zone is formed by one or more spaced-apart patterns Me and preferably the first light extraction means in the form of said first spaced-apart pattern or patterns Mi (6i) and of form substantially identical to Me and coinciding with the pattern or patterns Me or homothetically enlarged.

12. The light glazing as claimed in any one of the preceding claims, **characterized in that** the light glazing comprises means for trapping, and preferably absorbing, guided light likely to exit through the rim of the light guide, preferably chosen from among:
- an opaque layer on the rim of the light guide or on an element against or spaced apart by at most 1 cm from the rim of the guide
- an opaque adhesive tape on the rim of the light guide
- one or more of the opaque walls or flanges of a cover covering the rear masking element or forming said rear masking element, walls on or spaced apart by at most 1 cm from the rim of the light guide
- a first support of the first light source, called first source support, notably encircling the rim of the light guide or a second light source support on which is mounted a second light source
and **in that** preferably the first light source is coupled optically to a first rim of the guide, called coupling rim, or to a wall of a cavity of the guide, called optical coupling wall, and the glazing preferably also comprises an opaque element opposite the optical coupling rim or the optical coupling wall and spaced apart by at most 1 cm, which is a first support of the first light source, called first source support, or an opaque wall or flange of a cover covering the rear masking element or forming said rear masking element.

13. The light glazing as claimed in any one of the preceding claims, **characterized in that** any one of the preceding claims **characterized in that** the glazing is single, the face F1 is the face intended to be the outer face of the vehicle, the face F2 is the face intended to be the inner face of the vehicle and the masking zone (2) is a layer on the face F2, and **in that** the outer face (51) of the light guide is preferably placed on the face F2 or glued to the face F2 by an adhesive, preferably peripheral, and **in that**, preferably, the light guide is made of plastic, notably polycarbonate, polyester or PMMA.

14. The light glazing as claimed in any one of the preceding claims, **characterized in that** the first light source (4) is a set of inorganic light-emitting diodes on a front face of a first support, called first source support, and possibly comprises a second light source which is a set of inorganic light-emitting diodes on the rear face of said first source support or on a second support, called second source support, notably the diodes exhibiting front or side emission.

15. The light glazing as claimed in any one of the preceding claims, **characterized in that** the light guide (5) has a cavity (55) that is blind or passes through the thickness, notably linear and even bent, housing the first light source, a first wall delimiting the cavity being coupled optically to the first light source.

16. The light glazing as claimed in the preceding claim, **characterized in that** the light guide (5), notably plastic, has a cavity (55'), blind or passing through the thickness, for guiding the electric wiring (91) supplying the first light source.

17. The light glazing as claimed in one of claims 15 or 16, **characterized in that** the cavity houses a second light source, notably back-to-back with the first light source, and a wall delimiting the cavity being coupled optically to the second light source and the light guide having second light extraction means separated from the first light extraction means by the cavity.

18. The light glazing as claimed in any one of the preceding claims, **characterized in that** the overall thickness of the assembly of light guide, rear masking element and possible cover covering the rear masking element is at most 10 mm, notably from 2 to 10 mm and even 3 to 5 mm, notably when the first light source is a set of side-emitting inorganic light-emitting diodes with emitting faces of at most 1.5 mm, the thickness of the light guide is at most 2 mm and even at most 1.5 mm.

19. The light glazing as claimed in any one of the preceding claims, **characterized in that** it forms:
- a side window, preferably fixed, in particular a rear quarterlight or a vent light, fixed front door, fixed rear door,
- a rear window or a windshield, the first unmasked zone being a lateral and/or longitudinal strip of the preferably framing masking zone on the face F2,
- a roof, dome, or a front strip comprising a bottom longitudinal border intended to extend on the top longitudinal boundary of a windshield, the first unmasked zone being a bottom longitudinal strip of the masking zone.

20. A vehicle comprising at least one light glazing as claimed in any one of the preceding claims.
